# EUROPÄISCHE PATENTSCHRIFT

(11) **EP 3 981 981 B1**
(45) Veröffentlichungstag und Bekanntmachung des Hinweises auf die Patenterteilung: **25.12.2024**
(21) Anmeldenummer: 21201104.3
(22) Anmeldetag: 06.10.2021
(51) Int. Cl.: F03D 1/06

(54) **ROTORBLATT FÜR EINE WINDENERGIEANLAGE, WINDENERGIEANLAGE UND VERFAHREN ZUR AUSLEGUNG EINES ROTORBLATTS**
ROTOR BLADE FOR A WIND TURBINE, WIND TURBINE AND METHOD FOR DESIGNING A ROTOR BLADE
PALE DE ROTOR POUR UNE ÉOLIENNE, ÉOLIENNE ET PROCÉDÉ DE CONCEPTION D'UNE PALE DE ROTOR

(30) Priorität: 09.10.2020 DE 102020126484
(43) Veröffentlichungstag der Anmeldung: 13.04.2022
(73) Patentinhaber: Wobben Properties GmbH, 26607 Aurich (DE)
(72) Erfinder: Stemberg, Jochen, 26607 Aurich (DE); Maass, Hauke, 8000 Aarhus (DK); Knobbe Eschen, Henry, 28217 Bremen (DE)
(74) Vertreter: Eisenführ Speiser

(56) Entgegenhaltungen:
- CN-A- 106 050 566
- DE-A1- 102013 202 666
- US-A1- 2016 298 600
- US-A1- 2019 024 627

## Beschreibung

Die Erfindung betrifft ein Rotorblatt für eine Windenergieanlage, einen Rotor für eine Windenergieanlage sowie ein Verfahren zur Auslegung eines Rotorblatts.

Windenergieanlagen weisen einen Rotor mit mindestens einem, zwei oder mehreren Rotorblättern, vorzugsweise drei Rotorblättern, auf und sind ausgebildet, um aus kinetischer Windenergie mechanische Rotationsenergie und aus dieser elektrische Energie zu erzeugen. Derartige Windenergieanlagen sind allgemein bekannt und umfassen in der Regel eine Gondel, an der der Rotor angeordnet ist, und einen Turm, auf dem die Gondel mit dem Rotor um eine im Wesentlichen vertikal ausgerichtete Achse drehbar angeordnet ist.

Windenergieanlagen sind in der Regel als sogenannte Horizontalachsen-Windenergieanlagen ausgebildet, die einen Rotor mit einer im Wesentlichen horizontalen Achse umfassen, dessen Rotorblätter sich in einer Ebene im Wesentlichen senkrecht zum Wind drehen. Derartige Horizontalachsen-Windenergieanlagen nutzen zur Wandlung der kinetischen Windenergie in die mechanische Rotationsenergie das aerodynamische Prinzip des Auftriebs. Hierbei bildet ein Profil eines Rotorblatts eine Saugseite und eine Druckseite aus, sodass bei Umströmung des Profils mit bewegter Luft auf der Saugseite gegenüber der Druckseite ein Unterdruck entsteht. Der daraus resultierende Druckunterschied zwischen der Druckseite und der Saugseite führt zu einem aerodynamischen Auftrieb. Der Auftrieb ist hierbei beispielsweise von einem Anstellwinkel der Rotorblätter abhängig.

Bekannte Rotorblätter sind dahingehend nachteilig, dass die anliegende Luftströmung, insbesondere an einer Saugseite, abreißt und sich ein sogenanntes "Totwassergebiet" mit einer abgelösten Strömung bildet. Insbesondere bei größeren Anstellwinkeln kann die Strömung nicht mehr glatt an einem Profil eines Rotorblatts anliegen und reißt ab. Das Totwassergebiet mindert den Auftrieb des Rotorblatts und bremst das Rotorblatt ab, indem es dessen Widerstand erhöht. Dadurch wird ein Wirkungsgrad des Rotors und somit auch ein Ertrag einer Windenergieanlage reduziert.

Zur Verbesserung der aerodynamischen Eigenschaften von Rotorblättern und zur Steigerung der Effizienz sind unterschiedliche Lösungen bekannt. Beispielsweise ist es bekannt, Rotorblätter mit einer flachen Hinterkante, sog. Flatback-Profile, insbesondere im Innenbereich zu verwenden. Zur Produktion derartig dicker Profile mit einer druckseitig und saugseitig scharfen, flachen Hinterkante werden in der Regel zusätzliche Schaumeinleger benötigt. Daher ist die Produktion konstruktiv sehr aufwändig und mit erhöhten Kosten, insbesondere mit zusätzlichen Materialkosten, hohen Personalkosten und Herstellungskosten, verbunden.

Derartige Rotorblätter sind insbesondere dahingehend nachteilig, dass bei hohen Windgeschwindigkeiten oftmals unerwünschte Schwingungen auftreten. Eine bekannte dynamische Instabilität eines Rotorblatts stellt das Flattern, eine kombinierte Biege- und Torsionsschwingung, dar. Das Flattern, also insbesondere eine gegenseitige Anregung von Luftkräften, elastischen Kräften und Massekräften, kann entstehen, wenn das Rotorblatt zu einer oszillierenden Bewegung angeregt wird. Derartige Zustände sind insbesondere gefährlich, da sich Schwingungen aufaddieren können, indem immer mehr Energie aus einer Umströmung aufgenommen wird, wodurch beispielsweise die Rotorblätter Schaden nehmen können. Eine Rotordrehzahl der Windenergieanlage, oberhalb derer die Gefahr besteht, dass die Rotorblätter zum Flattern neigen, sollte daher in der Regel weit genug außerhalb üblicher Betriebsgrenzen liegen. Insbesondere bei in Zukunft größer und gleichzeitig leichter werdenden Rotorblättern steigt die Gefahr des Flatterns des Rotorblatts auch bei niedrigeren Windgeschwindigkeiten.

Aus diesem Grund können die durch die Flatback-Profile erzielbaren Vorteile lediglich bei Windenergieanlagen mit relativ kleinem Rotordurchmesser bei großer Nennleistung, beispielsweise mit 3 MW Nennleistung und einer Rotorkapazität von mehr als 500 W/m² oder mit 3 MW Nennleistung und einer Rotorkapazität von 374 W/m² oder mit 4,2 MW Nennleistung und einer Rotorkapazität von 337 W/m², wirtschaftlich genutzt werden.

Zur Einsparung von Kosten werden jedoch Windenergieanlagen zunehmend insbesondere derart ausgelegt, dass diese eine Rotorkapazität von weniger als 300 W/m² aufweisen. Dadurch kann in der Regel mehr Volllastbetriebszeit bei reduzierten Generatorkosten und reduzierten Anlagenlasten erzielt werden. Diese Auslegung führt jedoch insbesondere dazu, dass schon bei geringeren Windgeschwindigkeiten eine im inneren Rotorblattbereich erzeugte Leistung im äußeren Bereich teilweise wieder vernichtet werden muss, um das Drehmoment am Generator reduzieren zu können. Die in einer Rotorstromröhre zur Verfügung stehende Windleistung kann insbesondere in diesem Betriebszustand deutlich größer sein, als eine Leistung, die über den Generator abgeführt werden kann. Es ist beispielsweise bekannt, überschüssige Leistung durch Pitchen der Rotorblätter zu vernichten. Dadurch können jedoch insbesondere Strömungsablösungen an der Blattspitze entstehen, die wieder zu unerwünschten Schwingungen und insbesondere Flattern des Rotorblatts führen können.

Zur Vermeidung vorstehend genannter nachteiliger Betriebszustände ist die Windenergieanlage insbesondere schon bei relativ geringen Windgeschwindigkeiten, insbesondere ab einer Windgeschwindigkeit von 15 m/s oder 20 m/s oder 25 m/s, abzuschalten. Durch diese früher einsetzende Sturmregelung treten jedoch signifikante Ertragsverluste auf.

In der Luftfahrtbranche ist es beispielsweise bekannt, vorstehend genannte Nachteile durch eine Leistungsreduktion mittels einer Auftriebsreduktion oder einem signifikanten Widerstandsanstieg, insbesondere an der Blattwurzel und der Blattmitte, zu reduzieren oder verhindern. Bekannte Maßnahmen hierfür sind beispielsweise Bremsklappen, Wölbklappen, Spoiler und Split-Flaps. Nachteilig sind jedoch die technische Komplexität und der damit verbundene Wartungsaufwand. Aufgrund dieser Nachteile ist der Einsatz derartiger Maßnahmen bei Windenergieanlagen nicht wirtschaftlich.

Die existierenden Vorrichtungen zur Steigerung der Effizienz und/oder zur Vermeidung von unerwünschten Schwingungen und Flatterbewegungen bieten verschiedene Vorteile, jedoch sind weitere Verbesserungen wünschenswert.

Das Deutsche Patent- und Markenamt hat in der Prioritätsanmeldung zu vorliegender Anmeldung folgenden Stand der Technik recherchiert: DE 10 2008 052 858 A1, DE 10 2013 202 666 A1, DE 10 2019 113 085 A1, DE 20 2016 101 461 U1, US 8 944 775 B2, US 2008/0 240 923 A1, US 2019/0 024 627 A1, EP 1 944 505 A1, WO 2007/115 861 A1, WO 2009/068 719 A1.

Das Dokument CN 106050566 A offenbart darüber hinaus ein Rotorblatt, das eine Strahlströmungsvorrichtung aufweist, um eine aktive Strömungsregelung mit der Strahlströmungsvorrichtung auszuführen. Durch die aktive Strömungsregelung kann eine Strahlströmung an der Hinterkante, die stumpf ausgebildet ist, erzeugt werden. Dadurch soll die aerodynamische Effizienz des Rotorblatts verbessert werden.

Die Erfindung wird durch die beigefügten Ansprüche definiert,

Es ist daher eine Aufgabe der vorliegenden Erfindung, ein Rotorblatt für eine Windenergieanlage, eine Windenergieanlage und/oder ein Verfahren zur Auslegung eines Rotorblatts bereitzustellen, die einen oder mehrere der genannten Nachteile vermindern oder beseitigen. Es ist insbesondere eine Aufgabe der Erfindung, eine Lösung bereitzustellen, die Effizienz eines Rotorblatts einer Windenergieanlage für eine hohe Anlagenwirtschaftlichkeit weiter zu steigern und gleichzeitig Flatterbewegungen des Rotorblatts zu verhindern. Insbesondere ist es eine Aufgabe den Aufwand und die Komplexität der Produktion des Rotorblatts sowie die Produktionskosten zu reduzieren.

Gemäß einem ersten Aspekt wird diese Aufgabe gelöst durch ein Rotorblatt für eine Windenergieanlage, das sich in Längsrichtung mit einem Profilverlauf von einem Blattanschluss zu einer Blattspitze erstreckt, wobei der Profilverlauf zumindest ein Profil enthält, umfassend: eine Saugseite und eine Druckseite, eine relativen Profildicke von mehr als 25 %, eine Profilsehne, die sich zwischen einer Vorderkante und einer Hinterkante des Profils erstreckt und eine die Profiltiefe definierende Länge aufweist, eine Skelettlinie, die zumindest teilweise unterhalb der Profilsehne verläuft, einen sich auf der Saugseite ausgehend von der Hinterkante erstreckenden konvexen Bereich und einen sich auf der Druckseite ausgehend von der Hinterkante erstreckenden konvexen Bereich, wobei der konvexe Bereich auf der Druckseite einen abgerundeten Übergangsbereich der Druckseite zu der Hinterkante definiert.

Der Erfindung liegt die Erkenntnis zu Grunde, dass unerwünschte Schwingungen und insbesondere ein Flattern des Rotorblatts, bei hohen Windgeschwindigkeiten insbesondere auf große negative Anstellwinkel an der Rotorblattspitze zurückzuführen sind, die auftreten wenn bei sehr hohen Windgeschwindigkeiten, insbesondere bei Windgeschwindigkeiten oberhalb einer Windgeschwindigkeit, bei der die Nennleistung erreicht wird, vorzugsweise bei einer Windgeschwindigkeit von mehr als 15 m/s, eine im inneren Rotorblattbereich erzeugte Leistung im äußeren Bereich reduziert oder sogar teilweise wieder vernichtet werden muss, um das Drehmoment am Generator reduzieren zu können. Die in einer Rotorstromröhre zur Verfügung stehende Windleistung ist also vorzugsweise in diesem Betriebszustand deutlich größer, als eine Leistung, die über den Generator abgeführt werden kann. Die überschüssige Leistung kann insbesondere durch Pitchen der Rotorblätter reduziert oder vernichtet werden und bei hohen Windgeschwindigkeiten zu Strömungsablösungen an der Blattspitze führen. Diese Strömungsablösungen können die unerwünschten Schwingungen und insbesondere das Flattern des Rotorblatts anregen.

Die Erfinder haben herausgefunden, dass Flatback-Profile Abrundungen an Übergängen zu einer flachen Hinterkante, insbesondere an der druckseitigen Abströmkante, bereits mit kleinen Radien zu erheblichen Reduzierungen des Auftriebs führen können. Beispielsweise kann ein Radius an dem abgerundeten Übergangsbereich der Druckseite von etwa 5 % der Länge der Profilsehne an einem Profil mit einer relativen Profildicke von etwa 45 % zu einer Reduktion des Auftriebs um 30 % bis 80 % führen.

In der hier beschriebenen Lösung wird ein Rotorblatt mit mindestens einem Profil bereitgestellt, das sowohl auf der Saugseite als auch auf der Druckseite einen konvexen Bereich ausgehend von der Hinterkante aufweist.

Durch den abgerundeten Übergangsbereich der Druckseite zu der Hinterkante kann eine lokal produzierte Leistung bei hohen Windgeschwindigkeiten durch einen Verlust des Auftriebspotentials reduziert werden. Insbesondere durch eine Reduktion einer von der Blattwurzel produzierten Leistung kann mehr Leistung an einem Außenabschnitt bei höheren Anstellwinkeln erzeugt werden.

Ein weiterer Vorteil der vorliegenden Lösung besteht darin, dass durch die definierte Abrundung des Übergangsbereichs Auftriebsbeiwerte bedarfsabhängig angepasst werden können. Insbesondere kann die Geometrie des Rotorblatts entlang der Rotorblattlänge bedarfsabhängig unterschiedlich ausgestaltet sein. Vorteilhaft hierbei ist, dass die Geometrie einzelner Profile in Abhängigkeit der mittleren Jahreswindgeschwindigkeit angepasst werden kann. Vorteilhaft ist ferner, dass durch die vorgeschlagene Lösung insgesamt eine Effizienz einer Windenergieanlage und dadurch insbesondere einen Jahresertrag gesteigert werden kann.

Zudem kann der Produktionsaufwand derartiger Profile und/oder Rotorblätter sowie die Produktionskosten deutlich reduziert werden. Insbesondere kann das Profil bei Verlagerung einer Schalen- bzw. Formtrennung auf die saugseitige Hinterkante deutlich einfacher entformt werden, als bekannte Flatback-Profile. Darüber hinaus können bei der Produktion derartiger Profile und/oder Rotorblätter Material eingespart und dadurch die Materialkosten reduziert werden. Dadurch kann auch insbesondere ein Gesamtgewicht des Rotorblatts reduziert werden.

Das Rotorblatt erstreckt sich insbesondere in Längsrichtung in Richtung einer Rotorblattlänge sowie in Richtung einer Rotorblatttiefe und einer Rotorblattdicke. In Richtung der Rotorblattlänge erstreckt sich das Rotorblatt zwischen dem Blattanschluss und der Blattspitze. Die Rotorblatttiefe ist insbesondere im Wesentlichen orthogonal zu der Rotorblattlänge ausgerichtet und erstreckt sich zwischen der Vorderkante und der Hinterkante. Im Betrieb ist die Rotorblatttiefe im Wesentlichen parallel zu einer Anströmrichtung des Rotorblatts ausgerichtet. Insbesondere im Wesentlichen orthogonal zu der Richtung der Rotorblattlänge und der Rotorblatttiefe erstreckt sich das Rotorblatt in Richtung der Rotorblattdicke. Die Rotorblatttiefe und die Rotorblattdicke definieren insbesondere an im Wesentlichen jeder Position entlang der Rotorblattlänge ein aerodynamisches Profil.

Vorzugsweise kann die Hinterkante eine saugseitige Abströmkante, auch als saugseitige Hinterkante bezeichnet, und eine druckseitige Abströmkante, auch als druckseitige Hinterkante bezeichnet, aufweisen. Die saugseitige Abströmkante und die druckseitige Abströmkante können hierbei insbesondere voneinander beabstandet sein, sog. Flatback-Profil, also ein Profil mit flacher Hinterkante. In diesem Fall kann insbesondere das Rotorblatt an seinem hinteren Ende, also an der Hinterkante, eine spezifische Hinterkantenhöhe aufweisen und demnach im Wesentlichen nicht spitz zulaufen. Als Hinterkante kann dann zur Bestimmung der Profiltiefe insbesondere eine Position, vorzugsweise ein Mittelpunkt, zwischen saugseitiger Abströmkante und druckseitiger Abströmkante, herangezogen werden. Alternativ kann vorzugsweise das Profil eine geschlossene Hinterkante aufweisen. Bei einer geschlossenen Hinterkante kann die Profilsehne, vorzugsweise von der Vorderkante, zu einem Punkt auf dem das Profil zusammenläuft, der als Hinterkante bezeichnet wird, verlaufen. Vorzugsweise kann der druckseitige, abgerundete Übergangsbereich bis zu der saugseitigen Abströmkante verlaufen und insbesondere ein konvexes Auslaufen der Druckseite beschreiben. Die Vorderkante kann vorzugsweise ein Punkt der Profilnase sein, der am weitesten von der Hinterkante beabstandet ist.

Die Saugseite des Rotorblattes kann insbesondere einer Fläche des Rotorblattes entsprechen, die im Betrieb der Windenergieanlage einen Auftrieb erzeugt und somit bei Luftumströmung die Drehung eines Rotors, an dem das Rotorblatt befestigt ist, antreibt. Die Druckseite kann insbesondere der Saugseite gegenüberliegen.

Insbesondere kann der Profilverlauf des Rotorblatts eine Anzahl an Profilen, auch als Profilschnitte bezeichnet, aufweisen, die die Außenkontur des Rotorblatts definieren. Ein Rotorblatt umfasst in der Regel eine Mehrzahl unterschiedlicher Profile. Die Profile sollen an den verschiedenen Radiuspositionen eines Rotorblatts einen im Wesentlichen aerodynamisch optimalen Strömungsverlauf ermöglichen.

Unter einer Skelettlinie, auch als Profilmittellinie, Wölbungslinie oder Krümmungslinie bezeichnet, kann insbesondere eine Verbindungslinie der in das Profil einbeschriebenen Kreismittelpunkte verstanden werden. Vorzugsweise kann die Skelettlinie definiert werden als eine Linie, umfassend die Mittelpunkte zwischen der Saugseite und der Druckseite senkrecht zu einer X-Koordinate des Profils oder der Profilsehne.

Vorzugsweise kann unter einer relativen Profildicke eine maximale Dicke des Profils senkrecht zu der Profilsehne bezogen auf die Profilsehnenlänge verstanden werden. Vorzugsweise kann eine relative Profildicke von mindestens 45 % vorgesehen sein.

Sofern vorliegend auf Richtungsangaben relativ zu der Profilsehne, wie beispielsweise unter oder über, Bezug genommen wird, bezieht sich "unter" insbesondere auf eine Lage in einem Bereich zwischen der Profilsehne und der Druckseite und/oder "über" auf eine Lage in einem Bereich zwischen der Profilsehne und der Saugseite.

Das Rotorblatt, insbesondere das Profil mit dem abgerundeten Übergangsbereich der Druckseite zu der Hinterkante kann insbesondere eingesetzt werden, wenn Profilschnitte mit großen relativen Profildicken, insbesondere von mehr als 25 %, verwendet werden und eine Anpassung von Auftriebsbeiwerten erforderlich oder zumindest wünschenswert ist.

Besonders vorteilhaft und auf wirtschaftliche Art und Weise können die Profile in einem Nabenabschnitt und/oder einem Mittelabschnitt von Rotorblättern einer Windenergieanlage eingesetzt werden. Der Einsatz der Profile ist jedoch nicht auf den Einsatz in dem Nabenabschnitt und/oder dem Mittelabschnitt von Rotorblättern einer Windenergieanlage beschränkt.

Das Rotorblatt kann vorzugsweise einen an den Blattanschluss angrenzenden Innenabschnitt und einen an die Blattspitze angrenzenden Außenabschnitt umfassen. Insbesondere bevorzugt kann das Profil in dem Innenabschnitt vorgesehen sein. Vorzugsweise kann sich der Außenabschnitt zwischen 80 % und 100 % einer relativen Rotorblattlänge erstrecken. Vorzugsweise kann sich der Innenabschnitt zwischen 0 % und 80 % einer relativen Rotorblattlänge erstrecken. Der Innenabschnitt kann vorzugsweise den Nabenabschnitt und den Mittelabschnitt umfassen, wobei der Nabenabschnitt an den Blattanschluss angrenzt und der Mittelabschnitt an den Nabenabschnitt und an den Außenabschnitt, der insbesondere auch als Spitzenabschnitt bezeichnet werden kann, wobei vorzugsweise in dem Mittelabschnitt und/oder dem Nabenabschnitt zumindest teilweise das Profil vorgesehen ist. Insbesondere bevorzugt kann sich der Nabenabschnitt zwischen 0 % und 30 % der relativen Rotorblattlänge und der Mittelabschnitt zwischen 30 % und 80 % der relativen Blattlänge erstrecken.

Vorzugsweise kann der abgerundete Übergangsbereich einen Radius aufweisen. Der Radius kann vorzugsweise eine beliebige Größe aufweisen. Insbesondere kann der abgerundete Übergangsbereich unterschiedliche Radien aufweisen. Besonders bevorzugt kann der Radius oder die Radien oder mindestens ein Radius der Radien mindestens 5 % der Profilsehnenlänge aufweisen.

Insbesondere bevorzugt kann die saugseitige Abströmkante als scharfe Abströmkante mit einem Radius gleich Null oder annähernd Null ausgebildet sein.

Vorzugsweise kann sich der konvexe Bereich auf der Saugseite und/oder der konvexe Bereich auf der Druckseite ausgehend von der Hinterkante in Richtung der Vorderkante mit einer Erstreckung von maximal 1 % der Länge der Profilsehne, vorzugsweise von maximal 5 % bis maximal 30 % der Länge der Profilsehne, vorzugsweise bis maximal 40 % der Länge erstrecken.

Eine besonders bevorzugte Ausführungsform zeichnet sich dadurch aus, dass an dem abgerundeten Übergangsbereich eine Anordnung zur aerodynamischen Strömungsbeeinflussung angeordnet ist, wobei vorzugsweise die Anordnung als eine Gurney Flap oder eine Spreizklappe ausgebildet ist.

Alternativ kann beispielsweise die Anordnung als ein Luftauslass ausgebildet sein. Durch ausströmende Luft an dem Luftauslass kann insbesondere eine aerodynamische Strömungsbeeinflussung erzielt werden.

Die Erfinder haben herausgefunden, dass ein durch die Abrundung des Übergangsbereichs verursachter Auftriebsverlust durch die Anordnung zur aerodynamischen Strömungsbeeinflussung an diesem Übergangsbereich reduziert oder vollständig kompensiert werden kann. Darüber hinaus wird insbesondere durch die Anordnung ein Widerstand im Vergleich zu einem herkömmlichen Flatback-Profil nicht wesentlich beeinflusst.

Diese bevorzugte Ausführungsform ist insbesondere dahingehend vorteilhaft, dass das Profil hinsichtlich der Auftriebsleistung variiert und das Rotorblatt bedarfsabhängig, insbesondere in Abhängigkeit der mittleren Jahreswindgeschwindigkeit, ausgelegt werden kann.

Ein weiterer Vorteil dieser Ausgestaltung ist insbesondere, dass ein Produktionsaufwand eines Rotorblatts mit einem hohen Auftriebspotential reduziert werden kann. Ferner kann insbesondere die Notwendigkeit komplexer Produktionstechniken, wie zum Beispiel die Verwendung von Schaumeinlegern oder separat hergestellten Formelementen, entfallen.

Eine bevorzugte Fortbildung des Rotorblatts zeichnet sich dadurch aus, dass die Anordnung in einem Winkel größer 90 ° zu einer lokalen Sollanströmrichtung, insbesondere größer 100 ° zu einer lokalen Sollanströmrichtung, an dem abgerundeten Übergangsbereich angeordnet ist.

Gemäß dieser bevorzugten Fortbildung kann sich insbesondere die Anordnung, vorzugsweise die Gurney Flap oder die Spreizklappe, ausgehend von einer Oberfläche der Druckseite in einem Winkel größer 90 ° zu der lokalen Sollanströmrichtung, insbesondere größer 100 ° zu der lokalen Sollanströmrichtung, erstrecken.

Alternativ kann beispielsweise der Luftauslass derart auf der Oberfläche der Druckseite angeordnet sein, dass sich zwischen der lokalen Sollanströmrichtung und der Richtung der austretenden Luft ein Winkel größer 90°, insbesondere größer 100 °, befindet.

Durch diese Ausgestaltung kann eine kostenoptimierte Produktion der Rotorblätter gewährleistet werden. Vorteilhaft ist ferner, dass die Anordnung eine Anpassung eines Höhenverlaufs ermöglicht, um eine standortspezifische Auftriebsverteilung am Rotorblatt zu realisieren. Durch diese standortspezifischen Rotorblattanpassungen ist es beispielsweise möglich den Jahresenergieertrag zu erhöhen, oder bestimmte standortspezifische Lastfälle abzumildern, und dadurch den Betrieb bestimmter Windenergieanlagen an Standorten zu ermöglichen, die sonst aufgrund zu hoher Lasten ausgeschlossen wären.

Eine lokale Anströmrichtung kann insbesondere durch einen Summenvektor aus der Windgeschwindigkeit und der Geschwindigkeit der Rotorblattspitze ausgezeichnet sein.

Daher kommt es insbesondere bei einer Veränderung der Windgeschwindigkeit bei gleichbleibender Rotordrehzahl und gleichbleibendem Anstellwinkel des Rotorblatts zu einer Veränderung der lokalen Anströmrichtung und somit auch eines Anströmwinkels zwischen der Anströmrichtung und der Profilsehne. Dadurch kann insbesondere eine Änderung der Auftriebskraft, die auf das Rotorblatt wirkt, und somit letztlich eine Veränderung des Wirkungsgrads des Rotors bewirkt werden. Insbesondere bei pitchgeregelten Windkraftanlagen kann durch Verdrehen der Rotorblätter und der daraus folgenden Änderung des Anstellwinkels eine lokale Sollanströmrichtung eingestellt und/oder in etwa konstant gehalten werden.

Insbesondere ist es bevorzugt, wenn die Anordnung eine Länge zwischen 0,1 % und 40 % der Profiltiefe aufweist, wobei vorzugsweise die relative Profildicke des Profils maximal 30 % ist und die Länge der Anordnung maximal 10 % der Profiltiefe beträgt oder größer 30 % ist und die Länge der Anordnung maximal 40 % der Profiltiefe beträgt.

Insbesondere kann sich die Länge ausgehend von der Oberfläche der Druckseite bis zu einer äußeren Konturkante der Anordnung erstrecken. Die Länge und insbesondere die äußere Konturkante kann beispielsweise bei einem Luftauslass auch durch eine austretende Luft definiert werden.

Vorzugsweise kann ein Abstand zwischen der äußeren Konturkante der Anordnung und der saugseitigen Abströmkante mindestens 0,1 % bis 40 % einer sich zwischen der Saugseite und der Druckseite einstellenden maximalen Profildicke betragen.

Insbesondere bevorzugt kann eine Länge der Anordnung eines ersten Profils, das einen ersten Abstand zu der Blattwurzel aufweist, größer sein, als eine Länge der Anordnung eines zweiten Profils, das einen zweiten Abstand zu der Blattwurzel aufweist, wobei der zweite Abstand größer ist als der erste Abstand.

Insbesondere bevorzugt kann die Länge der Anordnung eines Profils in dem Innenabschnitt, insbesondere dem Nabenabschnitt, zwischen 10 % und 40 % der sich zwischen der Saugseite und der Druckseite einstellenden maximalen Profildicke betragen. Vorzugsweise kann die Länge der Anordnung eines Profils in dem Mittelabschnitt und/oder dem Außenabschnitt zwischen 0,1 und 5 % betragen.

Vorzugsweise kann der Radius oder können die Radien des abgerundeten Übergangsbereichs zwischen 0 % und 100 % des Abstands zwischen der äußeren Konturkante der Anordnung und der saugseitigen Abströmkante betragen.

Insbesondere bevorzugt kann eine gedachte Verbindungslinie zwischen der äußeren Konturkante der Anordnung und der saugseitigen Abströmkante vorzugsweise im Wesentlichen orthogonal zu der Sollanströmrichtung ausgerichtet sein. Die Erfinder haben erkannt, dass diese gedachte Verbindungslinie insbesondere einer stumpfen Hinterkante eines bekannten Flatbackprofils entsprechen kann.

Vorzugsweise kann die gedachte Verbindungslinie zwischen der äußeren Konturkante der Anordnung und der saugseitigen Abströmkante im Wesentlichen mehr als 90°, insbesondere zwischen 90° und 120°, geneigt zu der Sollanströmungsrichtung ausgerichtet sein. Hierbei kann die Anordnung insbesondere über eine Kontur eines bekannten Flatbackprofils hinausragen. Daraus können insbesondere ein höherer Widerstand und höhere Momentenbeiwerte sowie eine Auftriebssteigerung und eine Vergrößerung der effektiv wirksamen Fläche auf der Druckseite resultieren. Insgesamt kann dadurch insbesondere eine Verringerung des Gesamtwiderstandes und/oder eine Optimierung des Auftriebs erzielt werden.

Derartige Profile können insbesondere im Profilverlauf an einem Übergang zu einem Kreiszylinder an der Rotorblattwurzel ausgebildet sein, da insbesondere hier höchstmögliche Auftriebsbeiwerte angestrebt werden. Durch diesen zusätzlich erreichbaren Auftrieb kann das Rotorblatt vorzugsweise in Betriebszuständen mit großen Anstellwinkeln zusätzlich stabilisiert werden, um Strömungsablösungen zu vermeiden. Derartig große Anstellwinkel können insbesondere im oberen Teillastbereich auftreten, wenn die Nennleistung noch nicht erreicht ist, die optimale Schnelllaufzahl aufgrund von Limitationen der Blattspitzengeschwindigkeit aber bereits verlassen werden muss.

Eine weiter bevorzugte Fortbildung des Rotorblatts zeichnet sich dadurch aus, dass die Anordnung von einer ersten Position, in der der Abstand zwischen der äußeren Konturkante der Anordnung und der saugseitigen Abströmkante mindestens 10 % der sich zwischen der Saugseite und der Druckseite einstellenden maximalen Profildicke beträgt, in Richtung einer zweiten Position, die eine auftriebsreduzierte Konfiguration beschreibt, in der der Abstand zwischen der äußeren Konturkante der Anordnung und der saugseitigen Abströmkante reduziert ist, bewegbar ist.

Dadurch wird ein starkes und insbesondere bedarfsabhängiges Variieren der Auftriebsleistung ermöglicht. Vorzugsweise kann durch die Möglichkeit einer passgenauen Einstellung der Anordnung eine Ertragssteigerung erzielt werden. Ferner können beispielsweise kritische Betriebszustände und Lastminimierungen vermieden werden.

Die Anordnung kann vorzugsweise um eine innere Konturkante, die an der Druckseite angeordnet ist, verschwenkbar sein.

Insbesondere bevorzugt kann die Anordnung einfahrbar und ausfahrbar sein, wobei vorzugsweise die eingefahrene Position die zweite Position beschreibt, wobei vorzugsweise die Anordnung in der zweiten Position relativ zu einer Ebene, die mit einer druckseitigen Oberfläche deckungsgleich ist, nach innen vertieft ist. Insbesondere kann die Anordnung in der ersten Position relativ zu dieser Ebene nach außen vorstehen.

Es ist besonders bevorzugt, wenn die Anordnung zur Auftriebskontrolle aktiv steuerbar ausgebildet ist. Insbesondere kann die Anordnung einen Aktor umfassen, der von einer Steuereinheit angesteuert werden kann, um die Anordnung von der ersten Position in die zweite Position sowie von der zweiten Position in die erste Position und/oder in eine beliebige weitere Position zwischen der ersten Position und der zweiten Position zu bewegen.

Dadurch kann die Anordnung insbesondere bedarfsabhängig gezielt und passgenau eingestellt werden, um eine Ertragssteigerung zu erzielen und im Falle eines Sturms kritische Betriebszustände und Lastminimierungen zu vermeiden.

Diese bevorzugte Ausführungsform ist insbesondere dahingehend vorteilhaft, dass das Profil in seiner Auftriebsleistung bedarfsabhängig stark variiert werden kann. Durch diese Ausgestaltung kann die lokal, insbesondere von der Rotorblattwurzel und dem Blattmittenbereich, erzeugte Leistung gezielt reduziert werden, vorzugsweise bei hohen Windgeschwindigkeiten, um große negative Anstellwinkel lokal, insbesondere an der Rotorblattspitze, vermeiden zu können. Dadurch kann eine Sturmabschaltung der Windenergieanlage zu größeren Windgeschwindigkeiten verschoben werden und somit eine Ertragssteigerung, insbesondere bei windstarken Standorten, erzielt werden.

Durch die aktiv steuerbare Anordnung kann insbesondere der lokale Auftriebsbeiwert an Profilen in einem weiten Bereich an den jeweiligen Betriebszustand der Windkraftanlage angepasst werden. So kann für jeden Betriebszustand eine optimierte Induktionsfaktorverteilung realisiert werden, die sich insbesondere deutlich leistungssteigernd auswirkt.

Beispielsweise kann die Anordnung als Gurney Flap, insbesondere als Scharnier, Elastic-Flap oder Linearelement mit Aktuator oder als aufblasbare Kontur, und aktiv steuerbar ausgebildet sein.

In einer weiter bevorzugten Ausführungsvariante des Rotorblatts ist vorgesehen, dass die Skelettlinie in einem Bereich, in dem die Skelettlinie von dem sich auf der Druckseite ausgehend von der Hinterkante erstreckenden konvexen Bereich und dem sich auf der Saugseite ausgehend von der Hinterkante erstreckenden konvexen Bereich definiert wird, unter der Profilsehne verläuft und/oder eine mathematisch positive Krümmung aufweist.

Insbesondere kann der konvexe Bereich auf der Druckseite eine stärkere Konvexität aufweisen als der konvexe Bereich auf der Saugseite.

Vorzugsweise kann die Skelettlinie in einem Endbereich steil in Richtung der Saugseite verlaufen. Insbesondere können Steigungen von Tangenten im Endbereich steiler sein, als Steigungen von Tangenten vor dem Endbereich. Vorzugsweise kann sich der Endbereich von der Hinterkante in Richtung der Vorderkante mit einer Erstreckung kleiner 50 % des Hinterkantenbereichs, insbesondere kleiner 30 % des Hinterkantenbereichs, insbesondere kleiner 10 % des Hinterkantenbereichs, erstrecken.

Insbesondere bevorzugt kann die Skelettlinie im Bereich der Hinterkante einen S-Schlag aufweisen.

Die Skelettlinie kann vorzugsweise die mathematisch positive Krümmung insbesondere in einem Bereich ausgehend von der Hinterkante in Richtung der Vorderkante mit einer Erstreckung zwischen 20% und 0 % der Länge der Profilsehne, insbesondere zwischen 10 % und 0 % der Länge der Profilsehne, aufweisen.

Es ist besonders bevorzugt, wenn die Skelettlinie in dem Bereich, in dem die Skelettlinie von dem sich auf der Druckseite ausgehend von der Hinterkante erstreckenden konvexen Bereich und dem sich auf der Saugseite ausgehend von der Hinterkante erstreckenden konvexen Bereich definiert wird, ein hinteres lokales Minimum aufweist, das unter der Profilsehne liegt, und/oder wenn die Skelettlinie in einem Bereich, in dem die Skelettlinie von einem sich auf der Druckseite ausgehend von der Vorderkante erstreckenden konvexen Bereich und dem sich auf der Saugseite ausgehend von der Vorderkante erstreckenden konvexen Bereich definiert wird, ein vorderes lokales Minimum aufweist, das unter der Profilsehne liegt.

Sofern vorliegend auf Richtungsangaben betreffend das Minimum oder die Minima, wie beispielsweise hinteres lokales Minimum und/oder vorderes lokales Minimum, Bezug genommen wird, beziehen sich diese insbesondere auf eine Lage relativ zu dem Profil, wobei insbesondere die Vorderkante als vorderes Ende und die Hinterkante als hinteres Ende des Profils zu verstehen sind. Somit kann sich insbesondere das vordere lokale Minimum weiter in Richtung der Vorderkante als das hintere lokale Minimum befinden.

Vorzugsweise kann sich der konvexe Bereich auf der Saugseite und/oder der konvexe Bereich auf der Druckseite ausgehend von der Vorderkante in Richtung der Hinterkante mit einer Erstreckung zwischen 0 % und 60 % der Länge der Profilsehne erstrecken.

Besonders bevorzugt ist, dass die Skelettlinie das vordere lokale Minimum und das hintere lokale Minimum aufweist, wobei die Druckseite in einem Bereich, der zwischen dem konvexen Bereich, der sich ausgehend von der Vorderkante erstreckt, und dem konvexen Bereich, der sich ausgehend von der Hinterkante erstreckt, einen konkaven Bereich aufweist, wobei vorzugsweise das hintere lokale Minimum oder das vordere lokale Minimum ein absolutes Minimum ist.

Gemäß einer besonders bevorzugten Fortbildung ist vorgesehen, dass die gesamte Skelettlinie unter der Profilsehne verläuft. Demnach kann die Skelettlinie vorzugsweise in einem Bereich zwischen der Profilsehne und der Druckseite verlaufen.

Bevorzugt ist es ferner, wenn die Hinterkante eine geschlossene Hinterkante ist oder eine flache Hinterkante ist, wobei eine Höhe der flachen Hinterkante weniger als 40 %, vorzugsweise weniger als 20 %, vorzugsweise weniger als 10 %, der sich zwischen der Saugseite und der Druckseite einstellenden maximalen Profildicke, beträgt und/oder gegebenenfalls in etwa 50 % des Abstands zwischen der äußeren Konturkante der Anordnung und der saugseitigen Abströmkante beträgt.

In einer weiter bevorzugten Fortbildung des Rotorblatts ist vorgesehen, dass das Profil eine Dickenrücklage aufweist, die ein Verhältnis aus einem Abstand einer maximalen Profildicke von der Vorderkante in Richtung der Profilsehne und der Länge der Profilsehne definiert, wobei das Verhältnis vorzugsweise weniger als 40 % ist.

Gemäß einem weiteren Aspekt wird die eingangs genannte Aufgabe gelöst durch eine Windenergieanlage mit mindestens einem Rotorblatt, wie vorstehend beschrieben.

Gemäß einem weiteren Aspekt wird die eingangsgenannte Aufgabe gelöst durch ein Verfahren zur Auslegung eines Rotorblatts, das sich in Längsrichtung mit einem Profilverlauf von einem Blattanschluss zu einer Blattspitze erstreckt, mit den Schritten: Wählen mindestens eines Profils für den Profilverlauf, umfassend eine Saugseite und eine Druckseite, eine relativen Profildicke von mehr als 25 %, eine Profilsehne, die sich zwischen einer Vorderkante und einer Hinterkante des Profils erstreckt und eine eine Profiltiefe definierende Länge aufweist, eine Skelettlinie, die zumindest teilweise unter der Profilsehne verläuft, einen sich auf der Saugseite ausgehend von der Hinterkante erstreckenden konvexen Bereich und einen sich auf der Druckseite ausgehend von der Hinterkante erstreckenden konvexen Bereich, wobei der konvexe Bereich auf der Druckseite einen abgerundeten Übergangsbereich der Druckseite zu der Hinterkante definiert, vorzugsweise Anpassen eines Höhenverlaufs eines Profils durch Anordnen einer Anordnung zur aerodynamischen Strömungsbeeinflussung an dem abgerundeten Übergangsbereich, wobei das Wählen des mindestens einen Profils und/oder das Anpassen des Höhenverlaufs zumindest teilweise auf einer Berechnung eines zu erzielenden Jahresenergieertrags und/oder einer Bestimmung zu erwartender standortspezifischer Lastfällen beruht.

Eine besonders bevorzugte Ausführungsform sieht vor, dass der Höhenverlauf des Profils derart angepasst wird, dass ein Abstand zwischen einer äußeren Konturkante der Anordnung und einer saugseitigen Abströmkante mindestens 10 % einer sich zwischen der Saugseite und der Druckseite einstellenden maximalen Profildicke beträgt, vorzugsweise weiter umfassend den Schritt: Anpassen eines lokalen Auftriebsbeiwertes, insbesondere an einen Betriebszustand einer Windenergieanlage, durch ein Ausrichten der Anordnung durch Bewegen der Anordnung von einer ersten Position, in der der Abstand zwischen einer äußeren Konturkante der Anordnung und einer saugseitigen Abströmkante mindestens 10 % der sich zwischen der Saugseite und der Druckseite einstellenden maximalen Profildicke beträgt, in Richtung einer zweiten Position, die eine auftriebsreduzierte Konfiguration beschreibt, in der der Abstand zwischen der äußeren Konturkante der Anordnung und der saugseitigen Abströmkante reduziert ist und/oder Bewegen der Anordnung von einer zweiten Position, die eine auftriebsreduzierte Konfiguration beschreibt, in der der Abstand zwischen der äußeren Konturkante der Anordnung und der saugseitigen Abströmkante weniger als 10 % der sich zwischen der Saugseite und der Druckseite einstellenden maximalen Profildicke beträgt, in Richtung einer ersten Position, in der der Abstand zwischen einer äußeren Konturkante der Anordnung und einer saugseitigen Abströmkante mindestens 10 % der sich zwischen der Saugseite und der Druckseite einstellenden maximalen Profildicke beträgt.

Für weitere Vorteile, Ausführungsvarianten und Ausführungsdetails der weiteren Aspekte und ihrer möglichen Fortbildungen wird auch auf die zuvor erfolgte Beschreibung zu den entsprechenden Merkmalen und Fortbildungen verwiesen.

Bevorzugte Ausführungsbeispiele werden beispielhaft anhand der beiliegenden Figuren beschrieben. Es zeigen:
- Figur 1:: eine schematische, dreidimensionale Ansicht einer beispielhaften Ausführungsform einer Windenergieanlage;
- Figur 2A:: eine Ansicht eines Profils mit einem abgerundeten Übergangsbereich der Druckseite zu der Hinterkante;
- Figur 2B:: eine Ansicht eines Profils mit einem abgerundeten Übergangsbereich der Druckseite zu der Hinterkante;
- Figur 3A:: eine Ansicht eines Profils mit einem abgerundeten Übergangsbereich der Druckseite zu der Hinterkante;
- Figur 3B:: eine Ansicht eines Profils mit einem abgerundeten Übergangsbereich der Druckseite zu der Hinterkante;
- Figur 4A:: eine Ansicht eines Profils mit einem abgerundeten Übergangsbereich der Druckseite zu der Hinterkante;
- Figur 4B:: eine Ansicht eines Profils mit einem abgerundeten Übergangsbereich der Druckseite zu der Hinterkante;
- Figur 5:: eine Ansicht eines Profils mit einem abgerundeten Übergangsbereich der Druckseite zu der Hinterkante und einer Anordnung zur aerodynamischen Strömungsbeeinflussung;
- Figur 6:: eine Ansicht eines Profils mit einem abgerundeten Übergangsbereich der Druckseite zu der Hinterkante und einer Anordnung zur aerodynamischen Strömungsbeeinflussung;
- Figur 7:: eine Ansicht eines Profils mit einem abgerundeten Übergangsbereich der Druckseite zu der Hinterkante und einer Anordnung zur aerodynamischen Strömungsbeeinflussung; und
- Figur 8:: ein Diagramm, in dem Auftriebsbeiwerte unterschiedlicher Profile dargestellt sind.

In den Figuren sind gleiche oder im Wesentlichen funktionsgleiche Elemente mit den gleichen Bezugszeichen versehen. Allgemeine Beschreibungen beziehen sich in der Regel auf alle Ausführungsformen, sofern Unterschiede nicht explizit angegeben sind.

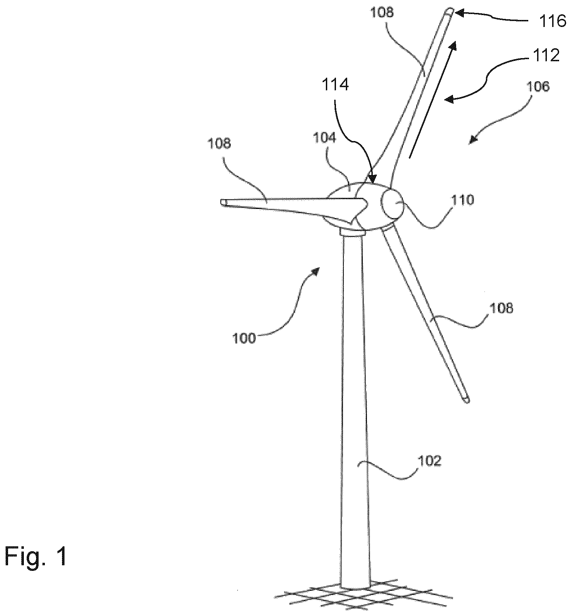

Die Erläuterung der Erfindung anhand von Beispielen unter Bezugnahme auf die Figuren erfolgt im Wesentlichen schematisch und die Elemente, die in der jeweiligen Figur erläutert werden, können darin zur besseren Veranschaulichung überzeichnet und andere Elemente vereinfacht sein. So veranschaulicht beispielsweise Figur 1 eine Windenergieanlage als solche schematisch, sodass die Ausgestaltung der einzelnen Profile des Profilverlaufs nicht erkennbar ist.

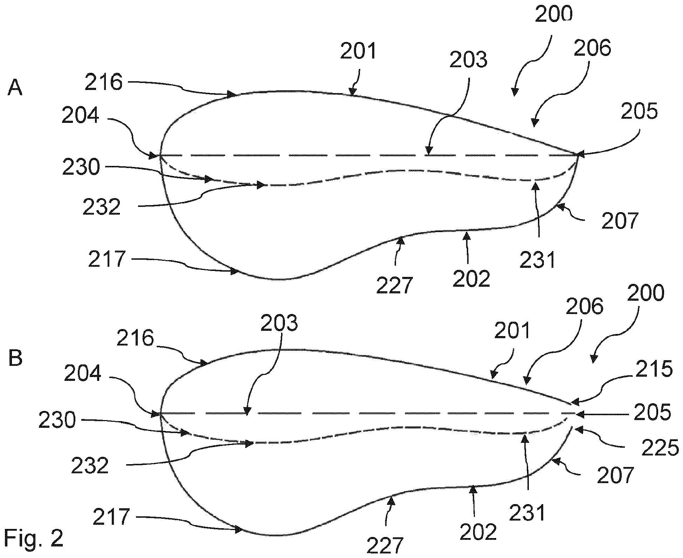

Figur 1 zeigt eine schematische, dreidimensionale Ansicht einer Windenergieanlage 100. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Zumindest eines der Rotorblätter weist einen Profilverlauf mit mindestens einem Profil auf, das jeweils einen auf der Saugseite und einen der Druckseite ausgehend von der Hinterkante erstreckenden konvexen Bereich aufweist (in Figur 1 nicht erkennbar), wie beispielsweise in Figuren 2 bis 7 gezeigt ist. Der aerodynamische Rotor 106 wird im Betrieb der Windenergieanlage 100 durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie.

Zumindest eines der in Figur 1 gezeigten Rotorblätter 108 erstreckt sich insbesondere in Längsrichtung 112 mit einem Profilverlauf von einem Blattanschluss 114 zu einer Blattspitze 116. Der Profilverlauf umfasst hierbei insbesondere zumindest ein Profil (in Figur 1 nicht gezeigt), wie nachfolgend beschrieben.

Die Figuren 2A bis 4B zeigen jeweils ein Profil 200 mit einer Saugseite 201 und einer der Saugseite 201 gegenüberliegenden Druckseite 202 in unterschiedlichen Ausführungsvarianten. Das Profil 200 weist vorzugsweise eine relative Profildicke, also insbesondere eine maximale Dicke des Profils senkrecht zu der Profilsehne 203 bezogen auf die Profilsehnenlänge, von mehr als 25 % auf. Die Profilsehnenlänge wird hierbei definiert als die Länge der Profilsehne 203, die sich ausgehend von der Vorderkante 204 bis zu der Hinterkante 205 erstreckt. Ausgehend von der Hinterkante 205 erstreckt sich sowohl an der Saugseite 201 ein konvexer Bereich 206 als auch an der Druckseite ein konvexer Bereich 207.

Wie die Figuren 2A bis 4B zeigen, kann die Druckseite 202 und/oder die Saugseite 201 insbesondere weitere konvexe Bereiche und/oder konkave Bereiche aufweisen. Beispielsweise kann die Druckseite 202 ausgehend von der Vorderkante 204 einen ersten konvexen Bereich 217, einen an den ersten konvexen Bereich 204 angrenzenden konkaven Bereich 227 und angrenzend an den konkaven Bereich 227 einen zweiten konvexen Bereich 207 aufweisen. Ein derartiger Verlauf der Druckseite 202 ist beispielsweise in den Figuren 2A bis 3B gezeigt. Insbesondere kann die Druckseite 202 und/oder die Saugseite 201 insgesamt konvex ausgebildet sein.

In Figur 2A ist ein Profil 200 mit einer geschlossenen Hinterkante 205 gezeigt, bei der die Profilsehne 203, vorzugsweise von der Vorderkante 204, zu einem Punkt auf dem das Profil zusammenläuft, der als Hinterkante 205 bezeichnet wird, verläuft. Figur 2B zeigt hingegen eine Hinterkante mit einer druckseitigen Abströmkante 225 und einer davon beabstandeten saugseitigen Abströmkante 215. Als Hinterkante 205 zur Bestimmung der Profiltiefe wird ein Mittelpunkt, zwischen der saugseitigen Abströmkante 215 und der druckseitigen Abströmkante 225 herangezogen. Die in den Figuren 2A und 2B gezeigten Profile 200 weisen jeweils eine Skelettlinie 230 auf, die unter der Profilsehne 203 verläuft.

Die Skelettlinie 230 weist in dem Bereich, in dem sie von dem sich auf der Druckseite 202 ausgehend von der Hinterkante 205 erstreckenden konvexen Bereich 207 und dem sich auf der Saugseite 201 ausgehend von der Hinterkante 205 erstreckenden konvexen Bereich 206 definiert wird, ein hinteres lokales Minimum 231 auf. Das hintere lokale Minimum 231 liegt unter der Profilssehne 203. Ferner weist die Skelettlinie 230 in einem Bereich, in dem die Skelettlinie 230 von einem sich auf der Druckseite 202 ausgehend von der Vorderkante 204 erstreckenden konvexen Bereich 217 und dem sich auf der Saugseite 201 ausgehend von der Vorderkante 204 erstreckenden konvexen Bereich 216 definiert wird, ein vorderes lokales Minimum 232 auf. In den in den Figuren 2A und 2B gezeigten Ausführungsvarianten liegt auch das vordere lokale Minimum 232 unter der Profilsehne 203. Das vordere lokale Minimum 232 ist in den hier gezeigten Beispielen das absolute Minimum.

Die Druckseite 202 weist in einem Bereich zwischen dem konvexen Bereich 207 und dem konvexen Bereich 217 einen konkaven Bereich 227 auf.

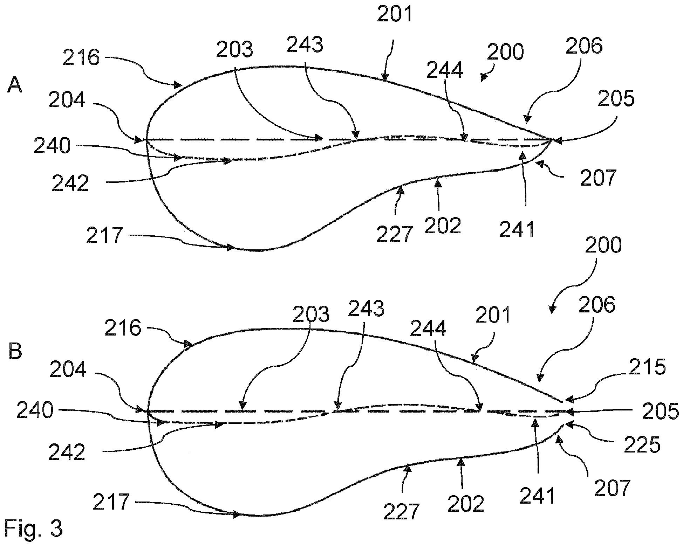

In Figur 3A ist ein Profil 200 mit einer geschlossenen Hinterkante 205 gezeigt, bei der die Profilsehne 203, vorzugsweise von der Vorderkante 204, zu einem Punkt auf dem das Profil zusammenläuft, der als Hinterkante 205 bezeichnet wird, verläuft. Figur 3B zeigt hingegen eine Hinterkante mit einer druckseitigen Abströmkante 225 und einer davon beabstandeten saugseitigen Abströmkante 215. Als Hinterkante 205 zur Bestimmung der Profiltiefe wird ein Mittelpunkt, zwischen der saugseitigen Abströmkante 215 und der druckseitigen Abströmkante 225 herangezogen. Die in den Figuren 3A und 3B gezeigten Profile 200 weisen jeweils eine Skelettlinie 240 auf, die unter der Profilsehne 203 verläuft.

Die Skelettlinie 240 weist in dem Bereich, in dem sie von dem sich auf der Druckseite 202 ausgehend von der Hinterkante 205 erstreckenden konvexen Bereich 207 und dem sich auf der Saugseite 201 ausgehend von der Hinterkante 205 erstreckenden konvexen Bereich 206 definiert wird, ein hinteres lokales Minimum 241 auf. Das hintere lokale Minimum 241 liegt unter der Profilssehne 203. Ferner weist die Skelettlinie 240 in einem Bereich, in dem die Skelettlinie 240 von einem sich auf der Druckseite 202 ausgehend von der Vorderkante 204 erstreckenden konvexen Bereich 217 und dem sich auf der Saugseite 201 ausgehend von der Vorderkante 204 erstreckenden konvexen Bereich 216 definiert wird, ein vorderes lokales Minimum 242 auf. In den in den Figuren 3A und 3B gezeigten Ausführungsvarianten liegt auch das vordere lokale Minimum 242 unter der Profilsehne 203.

Die Druckseite 202 weist in einem Bereich zwischen dem konvexen Bereich 216 und dem konvexen Bereich 217 einen konkaven Bereich 227 auf. Das vordere lokale Minimum 242 ist in den hier gezeigten Beispielen das absolute Minimum. In den hier gezeigten Beispielen verläuft die Skelettlinie 240 zumindest teilweise über der Profilsehne 203. Die Skelettlinie 240 schneidet die Profilsehne 203 zwischen dem hinteren lokalen Minimum 241 und dem vorderen Lokale Minimum 242 in einem ersten Schnittpunkt 243 und in einem zweiten Schnittpunkt 244. Die Skelettlinie 240 verläuft hierbei zwischen dem ersten Schnittpunkt 243 und dem zweiten Schnittpunkt 244 über der Profilsehne 203.

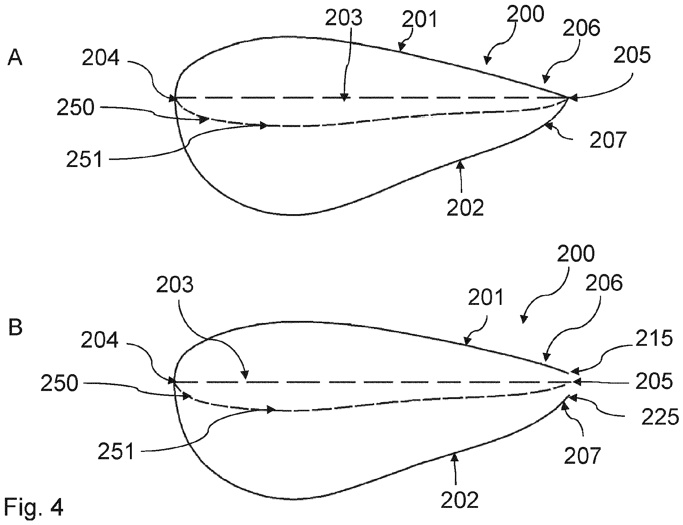

In Figur 4A ist ein Profil 200 mit einer geschlossenen Hinterkante 205 gezeigt, bei der die Profilsehne 203, vorzugsweise von der Vorderkante 204, zu einem Punkt auf dem das Profil zusammenläuft, der als Hinterkante 205 bezeichnet wird, verläuft. Figur 4B zeigt hingegen eine Hinterkante mit einer druckseitigen Abströmkante 225 und einer davon beabstandeten saugseitigen Abströmkante 215. Als Hinterkante 205 zur Bestimmung der Profiltiefe wird ein Mittelpunkt, zwischen der saugseitigen Abströmkante 215 und der druckseitigen Abströmkante 225 herangezogen.

Die in den Figuren 4A und 4B gezeigten Profile weisen jeweils eine Skelettlinie 250 auf, die unter der Profilsehne 203 verläuft und eine mathematisch positive Krümmung aufweisen. Die positive Krümmung wird definiert durch die im Wesentlichen konvexe Druckseite 202 und die im Wesentlichen konvexe Saugseite 201. Die Skelettlinie 250 weist hierbei ein einziges Minimum 251 auf, das unter der Profilsehne 203 liegt.

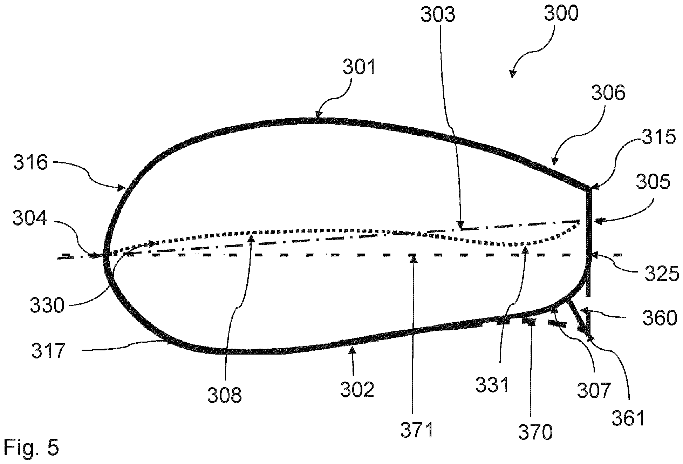

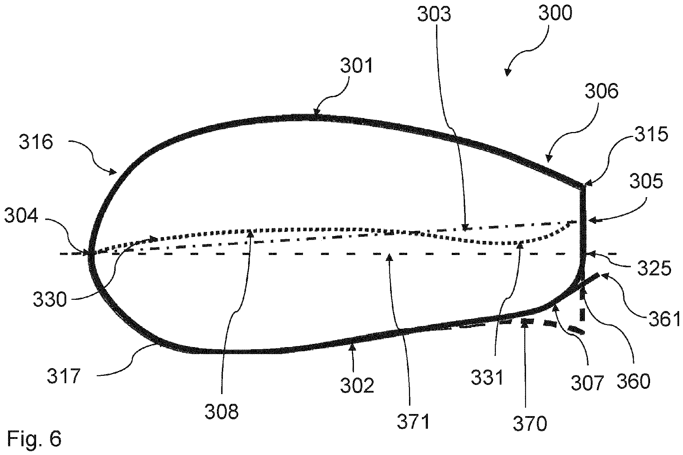

In den Figuren 5 und 6 ist ein Profil 300 mit einer Saugseite 301 und eine der Saugseite 301 gegenüberliegenden Druckseite 302 gezeigt. Das Profil 300 weist vorzugsweise eine relative Profildicke von mehr als 25 % auf. Die Profilsehne 303 erstreckt sich ausgehend von der Vorderkante 304 bis zu der Hinterkante 305. Ausgehend von der Hinterkante 305 erstreckt sich auf der Saugseite 301 ein konvexer Bereich 306 und auf der Druckseite ein konvexer Bereich 307. Der konvexe Bereich 307 definiert einen abgerundeten Übergangsbereich, an dem eine Anordnung 360 zur aerodynamischen Strömungsbeeinflussung angeordnet ist. In der hier gezeigten Ausführungsvariante ist beispielhaft schematisch eine Gurney Flap als Anordnung 360 dargestellt.

Das Profil 300 weist eine Hinterkante mit einer druckseitigen Abströmkante 325 und einer davon beabstandeten saugseitigen Abströmkante 315 auf. Als Hinterkante 305 zur Bestimmung der Profiltiefe wird ein Mittelpunkt zwischen der saugseitigen Abströmkante 315 und der druckseitigen Abströmkante 325 herangezogen. Die in den Figuren 5 und 6 gezeigten Profile 300 weisen jeweils eine Skelettlinie 330 auf, die teilweise unter der Profilsehne 303 verläuft. Die Skelettlinie 330 weist in dem Bereich, in dem sie von dem sich auf der Druckseite 302 ausgehend von der Hinterkante 305 erstreckenden konvexen Bereich 307 und dem sich auf der Saugseite 301 ausgehend von der Hinterkante 305 erstreckenden konvexen Bereich 306 definiert wird, ein Minimum 331 auf. Das Minimum 331 liegt unter der Profilsehne 303. Ferner weist die Skelettlinie 330 in einem Bereich, in dem die Skelettlinie 330 von einem sich auf der Druckseite 302 ausgehend von der Vorderkante 304 erstreckenden konvexen Bereich 317 und dem sich auf der Saugseite 301 ausgehend von der Vorderkante 304 erstreckenden konvexen Bereich 316 definiert wird, ein Maximum 308 auf, das über der Profilsehne 303 liegt.

In Figur 5 ist die Anordnung 360 in einer ersten Position, in der die äußere Konturkante 361 der Anordnung 360 von der druckseitigen Abströmkante 325 und somit auch der saugseitigen Abströmkante 315 beabstandet ist. Dieser Abstand kann insbesondere mindestens 10 % der sich zwischen der Saugseite 301 und der Druckseite 302 einstellenden maximalen Profildicke betragen. In Figur 6 ist die Anordnung 360 in einer zweiten Position, die eine auftriebsreduzierte Konfiguration beschreibt, in der der Abstand zwischen der äußeren Konturkante 361 der Anordnung 360 und der druckseitigen Abströmkante 325 und damit auch der saugseitigen Abströmkante 315 reduziert ist.

Insbesondere bevorzugt kann die Anordnung 360 von der ersten Position in die zweite Position bewegt werden. Vorzugsweise kann die Anordnung 360 zur Auftriebskontrolle hierbei aktiv steuerbar ausgebildet sein.

Die Figuren 5 und 6 zeigen, dass die Anordnung 360 ausgebildet ist, um einen Höhenverlauf des Profils 300 anzupassen. Durch die Anordnung 360 in der in Figur 5 dargestellten ersten Position kann die äußere Konturkante 361 als druckseitige Abströmkante fungieren. Dadurch kann der Höhenverlauf des Profils in etwa einem Höhenverlauf eines Flatback-Profils 370 mit einer entsprechenden Profilsehne 371 entsprechen. Eine diese Profilsehne 371 definierende Hinterkante fällt hierbei mit der druckseitigen Abströmkante 325 zusammen. Diese Hinterkante ist ein Mittelpunkt zwischen der äußeren Konturkante 361 der Anordnung 360 und der saugseitigen Abströmkante 315.

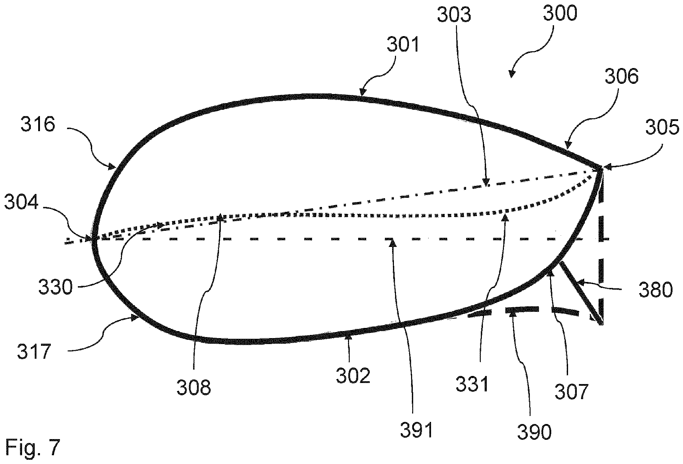

Auch in Figur 7 ist ein Profil 300 mit einer Saugseite 301 und einer der Saugseite 301 gegenüberliegenden Druckseite 302 gezeigt. Das Profil 300 weist vorzugsweise eine relative Profildicke von mehr als 25 % auf. Die Profilsehne 303 erstreckt sich ausgehend von der Vorderkante 304 bis zu der geschlossenen Hinterkante 305. Ausgehend von der Hinterkante 305 erstreckt sich auf der Saugseite 301 ein konvexer Bereich 306 und auf der Druckseite ein konvexer Bereich 307.

Das Profil weist eine Skelettlinie 330 auf, die teilweise unter der Profilsehne 303 verläuft. Die Skelettlinie 330 weist in dem Bereich, in dem sie von dem sich auf der Druckseite 302 ausgehend von der Hinterkante 305 erstreckenden konvexen Bereich 307 und dem sich auf der Saugseite 301 ausgehend von der Hinterkante 305 erstreckenden konvexen Bereich 306 definiert wird, ein Minimum 331 auf. Das Minimum 331 liegt unter der Profilsehne 303. Ferner weist die Skelettlinie 330 in einem Bereich, in dem die Skelettlinie 330 von einem sich auf der Druckseite 302 ausgehend von der Vorderkante 304 erstreckenden konvexen Bereich 317 und dem sich auf der Saugseite 301 ausgehend von der Vorderkante 304 erstreckenden konvexen Bereich 316 definiert wird, ein Maximum 308 auf, das über der Profilsehne 303 liegt.

Der konvexe Bereich 307 definiert einen abgerundeten Übergangsbereich, an dem eine Anordnung 380 zur aerodynamischen Strömungsbeeinflussung angeordnet ist. In der hier gezeigten Ausführungsvariante ist beispielhaft schematisch eine Gurney Flap als Anordnung 380 dargestellt. Die Anordnung 380 kann insbesondere fest installiert sein oder aktiv steuerbar sein, um einen Höhenverlauf des Profils 300 anzupassen und als druckseitige Abströmkante zu fungieren.

Im Vergleich zu der in Figur 5 gezeigten Anordnung 360 weist die Anordnung 380 eine größere Länge auf. Insbesondere kann eine Länge einer Anordnung 360 umso größer sein, je größer der Radius der Abrundung des Übergangsbereichs ist. Dadurch kann der Höhenverlauf des Profils 300 optimal angepasst werden, um in etwa einem Höhenverlauf eines Flatback-Profils 390 mit einer entsprechenden Profilsehne 391 zu entsprechen.

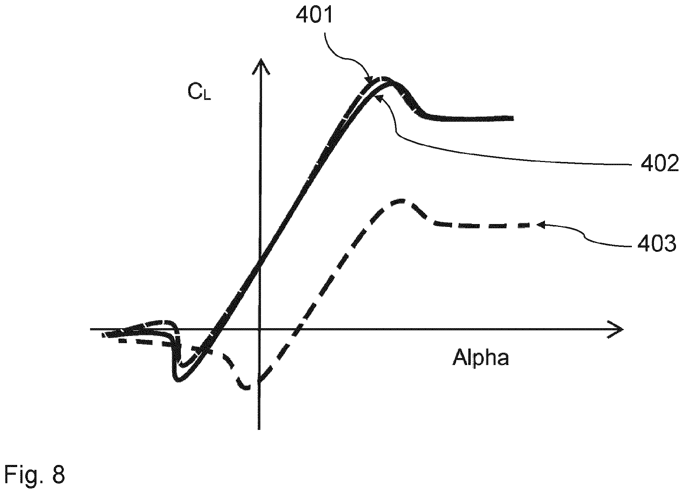

In Figur 8 ist ein Diagramm dargestellt, welches Auftriebsbeiwerte C_{L} unterschiedlicher Profile in Abhängigkeit des Anstellwinkels α darstellt. In Figur 8 sind drei Graphen 401, 402, 403 zu erkennen, wobei Graph 401 die Auftriebsbeiwerte eines Profils mit einem abgerundeten Übergangsbereich auf der Druckseite zu der Hinterkante mit einer Anordnung zur aerodynamischen Strömungsbeeinflussung, Graph 402 die Auftriebsbeiwerte eines Flatback-Profils und Graph 403 die Auftriebsbeiwerte eines Profils mit einem abgerundeten Übergangsbereich auf der Druckseite zu der Hinterkante ohne einer Anordnung zur aerodynamischen Strömungsbeeinflussung darstellt.

Im Vergleich der Graphen 402 und 403 ist zu erkennen, dass der abgerundete Übergangsbereich auf der Druckseite zu der Hinterkante bei gleichen Anstellwinkel einen deutlichen Verlust des Auftriebspotentials bewirkt. Das Anbringen der Anordnung zur aerodynamischen Strömungsbeeinflussung an dem abgerundeten Übergangsbereich, wie vorstehend beschrieben, bewirkt optimierte Auftriebsbeiwerte, die mit den Auftriebsbeiwerten des Flatback-Profils vergleichbar sind. Dieser Vergleich ist durch die Graphen 401 und 402 gezeigt.

Rotorblätter mit derartigen Profilen und Windenergieanlagen mit diesen Rotorblättern haben verschiedene Vorteile. Insbesondere können durch die vorstehend beschriebenen Ausführungsbeispiele Auftriebsbeiwerte bedarfsabhängig angepasst werden. Vorteilhaft ist ferner, dass durch die vorgeschlagene Lösung insgesamt eine Effizienz einer Windenergieanlage und dadurch insbesondere ein Jahresertrag gesteigert werden kann. Zudem können sowohl der Aufwand als auch die Kosten der Produktion reduziert und gleichzeitig Gewicht eingespart werden.

### Bezugszeichenliste

- 100: Windenergieanlage
- 102: Turm
- 104: Gondel
- 106: Rotor
- 108: Rotorblatt
- 110: Spinner
- 112: Längsrichtung
- 114: Blattanschluss
- 116: Blattspitze
- 200: Profil
- 201: Saugseite
- 202: Druckseite
- 203: Profilsehne
- 204: Vorderkante
- 205: Hinterkante
- 206: konvexer Bereich
- 207: konvexer Bereich
- 215: saugseitige Abströmkante
- 216: konvexer Bereich
- 217: konvexer Bereich
- 225: druckseitige Abströmkante
- 227: konkaver Bereich
- 230: Skelettlinie
- 231: lokales Minimum
- 232: lokales Minimum
- 240: Skelettlinie
- 241: lokales Minimum
- 242: lokales Minimum
- 243: erster Schnittpunkt
- 244: zweiter Schnittpunkt
- 250: Skelettlinie
- 251: Minimum
- 300: Profil
- 301: Saugseite
- 302: Druckseite
- 303: Profilsehne
- 304: Vorderkante
- 305: Hinterkante
- 306: konvexer Bereich
- 307: konvexer Bereich
- 315: saugseitige Abströmkante
- 325: druckseitige Abströmkante
- 330: Skelettlinie
- 331: Minimum
- 308: Maximum
- 360: Anordnung
- 361: äußere Konturkante
- 370: Höhenverlauf eines Flatback-Profils
- 371: Profilsehne
- 380: Anordnung
- 390: Höhenverlauf eines Flatback-Profils
- 391: Profilsehne
- 401: Graph
- 402: Graph
- 403: Graph

## Patentansprüche

1. Rotorblatt (108) für eine Windenergieanlage (100), das sich in Längsrichtung (112) mit einem Profilverlauf von einem Blattanschluss (114) zu einer Blattspitze (116) erstreckt,
wobei der Profilverlauf zumindest ein Profil (200, 300) enthält, umfassend:
- eine Saugseite (201, 301) und eine Druckseite (202, 302),
- eine relativen Profildicke von mehr als 25 %,
- eine Profilsehne (203, 303), die sich zwischen einer Vorderkante (204, 304) und einer Hinterkante (205, 305) des Profils (200, 300) erstreckt und eine die Profiltiefe definierende Länge aufweist,
- eine Skelettlinie (230, 240, 250, 330), die zumindest teilweise unterhalb der Profilsehne (203, 303), also in einer Lage in einem Bereich zwischen der Profilsehne (203, 303) und der Druckseite (202, 302), verläuft,
- einen sich auf der Saugseite (201, 301) ausgehend von der Hinterkante (205, 305) erstreckenden konvexen Bereich (206, 306) und
- einen sich auf der Druckseite (202, 302) ausgehend von der Hinterkante (205, 305) erstreckenden konvexen Bereich (207, 307),
wobei der konvexe Bereich (207, 307) auf der Druckseite (202, 302) einen abgerundeten Übergangsbereich der Druckseite (202, 302) zu der Hinterkante (205, 305) definiert,
**dadurch gekennzeichnet, dass** die Skelettlinie (230, 240, 250, 330) in dem Bereich, in dem die Skelettlinie (230, 240, 250, 330) von dem sich auf der Druckseite (202, 302) ausgehend von der Hinterkante (205, 305) erstreckenden konvexen Bereich (207, 307) und dem sich auf der Saugseite (201, 301) ausgehend von der Hinterkante (205, 305) erstreckenden konvexen Bereich (206, 306) definiert wird, ein hinteres lokales Minimum (231, 241) aufweist, das unter der Profilsehne (203, 303), also in einer Lage in einem Bereich zwischen der Profilsehne (203, 303) und der Druckseite (202, 302), liegt und, dass die Skelettlinie (230, 240, 250) in einem Bereich, in dem die Skelettlinie (230 240, 250) von einem sich auf der Druckseite (202) ausgehend von der Vorderkante (204) erstreckenden konvexen Bereich (207) und dem sich auf der Saugseite (201, 301) ausgehend von der Vorderkante (204, 304) erstreckenden konvexen Bereich (206) definiert wird, ein vorderes lokales Minimum (232, 242, 251) aufweist, das unter der Profilsehne (203, 303), also in einer Lage in einem Bereich zwischen der Profilsehne (203, 303) und der Druckseite (202, 302), liegt und/oder, dass die gesamte Skelettlinie (230, 240, 250, 330) unter derProfilsehne (203, 303), also in einer Lage in einem Bereich zwischen der Profilsehne (203, 303) und der Druckseite (202, 302), verläuft.

2. Rotorblatt (108) nach Anspruch 1, wobei an dem abgerundeten Übergangsbereich eine Anordnung (360, 380) zur aerodynamischen Strömungsbeeinflussung angeordnet ist,
wobei vorzugsweise die Anordnung (360, 380) als eine Gurney Flap oder eine Spreizklappe ausgebildet ist.

3. Rotorblatt (108) nach dem vorhergehenden Anspruch 2, wobei die Anordnung (360, 380) in einem Winkel größer 90 ° zu einer lokalen Sollanströmrichtung, insbesondere größer 100 ° zu einer lokalen Sollanströmrichtung, an dem abgerundeten Übergangsbereich angeordnet ist.

4. Rotorblatt (108) nach mindestens einem der vorhergehenden Ansprüche 2 oder 3, wobei die Anordnung (360, 380) eine Länge zwischen 0,1 % und 40 % der Profiltiefe aufweist,
wobei vorzugsweise die relative Profildicke des Profils (200, 300)
- maximal 30 % ist und die Länge der Anordnung (360, 380) maximal 10 % der Profiltiefe beträgt oder
- größer 30 % ist und die Länge der Anordnung (360, 380) maximal 40 % der Profiltiefe beträgt.

5. Rotorblatt (108) nach dem vorhergehenden Anspruch 4, wobei die Anordnung (360, 380) von einer ersten Position, in der der Abstand zwischen der äußeren Konturkante (361) der Anordnung (360, 380) und der saugseitigen Abströmkante mindestens 10 % der sich zwischen der Saugseite (201, 301) und der Druckseite (202, 302) einstellenden maximalen Profildicke beträgt, in Richtung einer zweiten Position, die eine auftriebsreduzierte Konfiguration beschreibt, in der der Abstand zwischen der äußeren Konturkante (361) der Anordnung (360, 380) und der saugseitigen Abströmkante (315) reduziert ist, bewegbar ist.

6. Rotorblatt (108) nach mindestens einem der vorhergehenden Ansprüche 2 bis 5, wobei die Anordnung (360, 380) zur Auftriebskontrolle aktiv steuerbar ausgebildet ist.

7. Rotorblatt (108) nach mindestens einem der vorhergehenden Ansprüche, wobei die Skelettlinie (230, 240, 250, 330) in einem Bereich, in dem die Skelettlinie (230, 240, 250, 330) von dem sich auf der Druckseite (202, 302) ausgehend von der Hinterkante (205, 305) erstreckenden konvexen Bereich (207, 307) und dem sich auf der Saugseite (201, 301) ausgehend von der Hinterkante (205, 305) erstreckenden konvexen Bereich (206, 306) definiert wird, unter der Profilsehne (203, 303) verläuft und/oder eine mathematisch positive Krümmung aufweist.

8. Rotorblatt (108) nach mindestens einem der vorhergehenden Ansprüche, umfassend das vordere lokale Minimum (232, 242) und das hintere lokale Minimum (231, 241),
wobei die Druckseite (202, 302) in einem Bereich, der zwischen dem konvexen Bereich (217), der sich ausgehend von der Vorderkante (204, 304) erstreckt, und dem konvexen Bereich (207), der sich ausgehend von der Hinterkante (205, 305) erstreckt, einen konkaven Bereich (227) aufweist,
wobei vorzugsweise das hintere lokale Minimum (231, 241) oder das vordere lokale Minimum (232, 242) ein absolutes Minimum ist.

9. Rotorblatt (108) nach mindestens einem der vorhergehenden Ansprüche, wobei die Hinterkante (205, 305)
- eine geschlossene Hinterkante (205, 305) ist oder
- eine flache Hinterkante (205, 305) ist, wobei eine Höhe der flachen Hinterkante (205, 305)
∘ weniger als 40 %, vorzugsweise weniger als 20 %, vorzugsweise weniger als 10 %, der sich zwischen der Saugseite (201, 301) und der Druckseite (202, 302) einstellenden maximalen Profildicke, beträgt und/oder
∘ gegebenenfalls in etwa 50 % des Abstands zwischen der äußeren Konturkante der Anordnung (360, 380) und der saugseitigen Abströmkante beträgt.

10. Rotorblatt (108) nach mindestens einem der vorhergehenden Ansprüche, wobei das Profil (200, 300) eine Dickenrücklage aufweist, die ein Verhältnis aus einem Abstand einer maximalen Profildicke von der Vorderkante (204, 304) in Richtung der Profilsehne (203, 303) und der Länge der Profilsehne (203, 303) definiert, wobei das Verhältnis vorzugsweise weniger als 40 % ist.

11. Windenergieanlage (100) mit mindestens einem Rotorblatt (108) nach mindestens einem der vorhergehenden Ansprüche 1 bis 10.

12. Verfahren zur Auslegung eines Rotorblatts (108), das sich in Längsrichtung (112) mit einem Profilverlauf von einem Blattanschluss (114) zu einer Blattspitze (116) erstreckt, mit den Schritten:
- Wählen mindestens eines Profils (200, 300) für den Profilverlauf, umfassend
∘ eine Saugseite (201, 301) und eine Druckseite (202, 302),
∘ eine relativen Profildicke von mehr als 25 %,
∘ eine Profilsehne (203, 303), die sich zwischen einer Vorderkante (204, 304) und einer Hinterkante (205, 305) des Profils (200, 300) erstreckt und eine eine Profiltiefe definierende Länge aufweist,
∘ eine Skelettlinie (230, 240, 250, 330), die zumindest teilweise unter der Profilsehne (203, 303), also in einer Lage in einem Bereich zwischen der Profilsehne (203, 303) und der Druckseite (202, 302), verläuft,
∘ einen sich auf der Saugseite (201, 301) ausgehend von der Hinterkante (205, 305) erstreckenden konvexen Bereich und
∘ einen sich auf der Druckseite (202, 302) ausgehend von der Hinterkante (205, 305) erstreckenden konvexen Bereich,
wobei der konvexe Bereich auf der Druckseite (202, 302) einen abgerundeten Übergangsbereich der Druckseite (202, 302) zu der Hinterkante (205, 305) definiert,
- vorzugsweise Anpassen eines Höhenverlaufs eines Profils (200, 300) durch Anordnen einer Anordnung (360, 380) zur aerodynamischen Strömungsbeeinflussung an dem abgerundeten Übergangsbereich,
wobei das Wählen des mindestens einen Profils (200, 300) und/oder das Anpassen des Höhenverlaufs zumindest teilweise auf einer Berechnung eines zu erzielenden Jahresenergieertrags und/oder einer Bestimmung zu erwartender standortspezifischer Lastfällen beruht **dadurch gekennzeichnet, dass**
die Skelettlinie (230, 240, 250, 330) in dem Bereich, in dem die Skelettlinie (230, 240, 250, 330) von dem sich auf der Druckseite (202, 302) ausgehend von der Hinterkante (205, 305) erstreckenden konvexen Bereich (207, 307) und dem sich auf der Saugseite (201, 301) ausgehend von der Hinterkante (205, 305) erstreckenden konvexen Bereich (206, 306) definiert wird, ein hinteres lokales Minimum (231, 241) aufweist, das unter der Profilsehne (203, 303), also in einer Lage in einem Bereich zwischen der Profilsehne (203, 303) und der Druckseite (202, 302), liegt und, dass
die Skelettlinie (230, 240, 250) in einem Bereich, in dem die Skelettlinie (230, 240, 250) von einem sich auf der Druckseite (202) ausgehend von der Vorderkante (204) erstreckenden konvexen Bereich (207) und dem sich auf der Saugseite (201, 301) ausgehend von der Vorderkante (204, 304) erstreckenden konvexen Bereich (206) definiert wird, ein vorderes lokales Minimum (232, 242, 251) aufweist, das unter der Profilsehne (203, 303), also in einer Lage in einem Bereich zwischen der Profilsehne (203, 303) und der Druckseite (202, 302), liegt und/oder, dass
die gesamte Skelettlinie (230, 240, 250, 330) unter derProfilsehne (203, 303), also in einer Lage in einem Bereich zwischen der Profilsehne (203, 303) und der Druckseite (202, 302), verläuft.

13. Verfahren nach dem vorhergehenden Anspruch 12, wobei der Höhenverlauf des Profils (200, 300) derart angepasst wird, dass ein Abstand zwischen einer äußeren Konturkante der Anordnung (360, 380) und einer saugseitigen Abströmkante mindestens 10 % einer sich zwischen der Saugseite (201, 301) und der Druckseite (202, 302) einstellenden maximalen Profildicke beträgt,
vorzugsweise weiter umfassend den Schritt:
- Anpassen eines lokalen Auftriebsbeiwertes, insbesondere an einen Betriebszustand einer Windenergieanlage (100), durch ein Ausrichten der Anordnung (360, 380) durch
∘ Bewegen der Anordnung (360, 380) von einer ersten Position, in der der Abstand zwischen einer äußeren Konturkante der Anordnung (360, 380) und einer saugseitigen Abströmkante mindestens 10 % der sich zwischen der Saugseite (201, 301) und der Druckseite (202, 302) einstellenden maximalen Profildicke beträgt, in Richtung einer zweiten Position, die eine auftriebsreduzierte Konfiguration beschreibt, in der der Abstand zwischen der äußeren Konturkante der Anordnung (360, 380) und der saugseitigen Abströmkante reduziert ist und/oder
∘ Bewegen der Anordnung (360, 380) von einer zweiten Position, die eine auftriebsreduzierte Konfiguration beschreibt, in der der Abstand zwischen der äußeren Konturkante der Anordnung (360, 380) und der saugseitigen Abströmkante weniger als 10 % der sich zwischen der Saugseite (201, 301) und der Druckseite (202, 302) einstellenden maximalen Profildicke beträgt, in Richtung einer ersten Position, in der der Abstand zwischen einer äußeren Konturkante der Anordnung (360, 380) und einer saugseitigen Abströmkante mindestens 10 % der sich zwischen der Saugseite (201, 301) und der Druckseite (202, 302) einstellenden maximalen Profildicke beträgt.

## Claims

1. A rotor blade (108) for a wind power installation (100), which extends in a longitudinal direction (112) with a profile course from a blade connector (114) to a blade tip (116), wherein the profile course contains at least one profile (200, 300), comprising:
- a suction side (201, 301) and a pressure side (202, 302),
- a relative profile thickness of greater than 25%,
- a profile chord (203, 303), which extends between a leading edge (204, 304) and a trailing edge (205, 305) of the profile (200, 300) and has a length which defines the profile depth,
- a mean line (230, 240, 250, 330) which extends at least partially below the profile chord (203, 303), thus in a position in a region between the profile chord (203, 303) and the pressure side (202, 302),
- a convex region (206, 306) which extends on the suction side (201, 301) from the trailing edge (205, 305), and
- a convex region (207, 307) which extends on the pressure side (202, 302) from the trailing edge (205, 305),
wherein the convex region (207, 307) on the pressure side (202, 302) defines a rounded transition region of the pressure side (202, 302) to the trailing edge (205, 305),
**characterized in that** the mean line (230, 240, 250, 330) has, in the region in which the mean line (230, 240, 250, 330) is defined by the convex region (207, 307) extending on the pressure side (202, 302) from the trailing edge (205, 305) and the convex region (206, 306) extending on the suction side (201, 301) from the trailing edge (205, 305), a rear local minimum (231, 241), which is situated below the profile chord (203, 303), thus in a position in a region between the profile chord (203, 303) and the pressure side (202, 302), and
**in that** the mean line (230, 240, 250) has, in a region in which the mean line (230, 240, 250) is defined by a convex region (207) extending on the pressure side (202) from the leading edge (204) and the convex region (206) extending on the suction side (201, 301) from the leading edge (204, 304), a front local minimum (232, 242, 251), which is situated below the profile chord (203, 303), thus in a position in a region between the profile chord (203, 303) and the pressure side (202, 302), and/or
**in that** the entire mean line (230, 240, 250, 330) extends below the profile chord (203, 303), thus in a position in a region between the profile chord (203, 303) and the pressure side (202, 302).

2. The rotor blade (108) as claimed in claim 1, wherein an arrangement (360, 380) for aerodynamic flow manipulation is arranged on the rounded transition region,
wherein preferably the arrangement (360, 380) is in the form of a Gurney flap or a split flap.

3. The rotor blade (108) as claimed in the preceding claim 2, wherein the arrangement (360, 380) is arranged on the rounded transition region at an angle of greater than 90° to a local target flow-on direction, in particular of greater than 100° to a local target flow-on direction.

4. The rotor blade (108) as claimed in at least either of the preceding claims 2 and 3, wherein the arrangement (360, 380) has a length of between 0.1% and 40% of the profile depth,
wherein preferably the relative profile thickness of the profile (200, 300)
- is at most 30% and the length of the arrangement (360, 380) is at most 10% of the profile depth, or
- is greater than 30% and the length of the arrangement (360, 380) is at most 40% of the profile depth.

5. The rotor blade (108) as claimed in the preceding claim 4, wherein the arrangement (360, 380) can be moved from a first position, in which the distance between the outer contour edge (361) of the arrangement (360, 380) and the suction-side flow-off edge is at least 10% of the maximum profile thickness which is established between the suction side (201, 301) and the pressure side (202, 302), in the direction of a second position, which describes a lift-reduced configuration in which the distance between the outer contour edge (361) of the arrangement (360, 380) and the suction-side flow-off edge (315) is reduced.

6. The rotor blade (108) as claimed in at least one of the preceding claims 2 to 5, wherein the arrangement (360, 380) is configured to be actively controllable for lift control.

7. The rotor blade (108) as claimed in at least one of the preceding claims, wherein the mean line (230, 240, 250, 330) extends below the profile chord (203, 303), and/or has a mathematically positive curvature, in a region in which the mean line (230, 240, 250, 330) is defined by the convex region (207, 307) extending on the pressure side (202, 302) from the trailing edge (205, 305) and the convex region (206, 306) extending on the suction side (201, 301) from the trailing edge (205, 305).

8. The rotor blade (108) as claimed in at least one of the preceding claims, comprising the front local minimum (232, 242) and the rear local minimum (231, 241),
wherein the pressure side (202, 302) has a concave region (227) in a region which is situated between the convex region (217) extending from the leading edge (204, 304) and the convex region (207) extending from the trailing edge (205, 305),
wherein preferably the rear local minimum (231, 241) or the front local minimum (232, 242) is an absolute minimum.

9. The rotor blade (108) as claimed in at least one of the preceding claims, wherein the trailing edge (205, 305)
- is a closed trailing edge (205, 305) or
- a flat trailing edge (205, 305), wherein a height of the flat trailing edge (205, 305)
∘ is less than 40%, preferably less than 20%, preferably less than 10%, of the maximum profile thickness which is established between the suction side (201, 301) and the pressure side (202, 302), and/or
∘ is possibly approximately 50% of the distance between the outer contour edge of the arrangement (360, 380) and the suction-side flow-off edge.

10. The rotor blade (108) as claimed in at least one of the preceding claims, wherein the profile (200, 300) has a thickness setback, which defines a ratio of a distance of a maximum profile thickness from the leading edge (204, 304) in the direction of the profile chord (203, 303) and the length of the profile chord (203, 303), wherein the ratio is preferably less than 40%.

11. A wind power installation (100) having at least one rotor blade (108) as claimed in at least one of the preceding claims 1 to 10.

12. A method for designing a rotor blade (108) which extends in a longitudinal direction (112) with a profile course from a blade connector (114) to a blade tip (116), comprising the steps of:
- selecting at least one profile (200, 300) for the profile course, comprising
∘ a suction side (201, 301) and a pressure side (202, 302),
∘ a relative profile thickness of greater than 25%,
∘ a profile chord (203, 303), which extends between a leading edge (204, 304) and a trailing edge (205, 305) of the profile (200, 300) and has a length which defines a profile depth,
∘ a mean line (230, 240, 250, 330) which extends at least partially below the profile chord (203, 303), thus in a position in a region between the profile chord (203, 303) and the pressure side (202, 302),
∘ a convex region which extends on the suction side (201, 301) from the trailing edge (205, 305), and
∘ a convex region which extends on the pressure side (202, 302) from the trailing edge (205, 305),
wherein the convex region on the pressure side (202, 302) defines a rounded transition region of the pressure side (202, 302) to the trailing edge (205, 305),
- preferably adapting a height course of a profile (200, 300) by arranging on the rounded transition region an arrangement (360, 380) for aerodynamic flow manipulation,
wherein selecting the at least one profile (200, 300) and/or adapting the height course are/is based at least partially on a calculation of an annual energy yield to be achieved and/or a determination of location-specific load situations to be expected,
**characterized in that** the mean line (230, 240, 250, 330) has, in the region in which the mean line (230, 240, 250, 330) is defined by the convex region (207, 307) extending on the pressure side (202, 302) from the trailing edge (205, 305) and the convex region (206, 306) extending on the suction side (201, 301) from the trailing edge (205, 305), a rear local minimum (231, 241), which is situated below the profile chord (203, 303), thus in a position in a region between the profile chord (203, 303) and the pressure side (202, 302), and
**in that** the mean line (230, 240, 250) has, in a region in which the mean line (230, 240, 250) is defined by a convex region (207) extending on the pressure side (202) from the leading edge (204) and the convex region (206) extending on the suction side (201, 301) from the leading edge (204, 304), a front local minimum (232, 242, 251), which is situated below the profile chord (203, 303), thus in a position in a region between the profile chord (203, 303) and the pressure side (202, 302), and/or
**in that** the entire mean line (230, 240, 250, 330) extends below the profile chord (203, 303), thus in a position in a region between the profile chord (203, 303) and the pressure side (202, 302).

13. The method as claimed in the preceding claim 12, wherein the height course of the profile (200, 300) is adapted in such a way that a distance between an outer contour edge of the arrangement (360, 380) and a suction-side flow-off edge is at least 10% of a maximum profile thickness which is established between the suction side (201, 301) and the pressure side (202, 302),
preferably further comprising the step of:
- adapting a local lift coefficient, in particular to an operating state of a wind power installation (100), through orientation of the arrangement (360, 380) by
∘ moving the arrangement (360, 380) from a first position, in which the distance between an outer contour edge of the arrangement (360, 380) and a suction-side flow-off edge is at least 10% of the maximum profile thickness which is established between the suction side (201, 301) and the pressure side (202, 302), in the direction of a second position, which describes a lift-reduced configuration in which the distance between the outer contour edge of the arrangement (360, 380) and the suction-side flow-off edge is reduced, and/or
∘ moving the arrangement (360, 380) from a second position, which describes a lift-reduced configuration in which the distance between the outer contour edge of the arrangement (360, 380) and the suction-side flow-off edge is less than 10% of the maximum profile thickness which is established between the suction side (201, 301) and the pressure side (202, 302), in the direction of a first position, in which the distance between an outer contour edge of the arrangement (360, 380) and a suction-side flow-off edge is at least 10% of the maximum profile thickness which is established between the suction side (201, 301) and the pressure side (202, 302).

## Revendications

1. Pale de rotor (108) pour une éolienne (100), qui s'étend en direction longitudinale (112) avec un tracé de profil à partir d'un raccordement de pale (114) vers un bout de pale (116),
dans laquelle le tracé de profil contient au moins un profil (200, 300), comprenant :
- un côté d'aspiration (201, 301) et un côté de pression (202, 302),
- une épaisseur de profil relative supérieure à 25 %,
- une corde de profil (203, 303), qui s'étend entre un bord d'attaque (204, 304) et un bord arrière (205, 305) du profil (200, 300) et présente une longueur définissant la profondeur de profil,
- une ligne moyenne (230, 240, 250, 330), qui passe au moins en partie au-dessous de la corde de profil (203, 303), par conséquent dans une couche dans une zone entre la corde de profil (203, 303) et le côté de pression (202, 302),
- une zone convexe (206, 306) s'étendant sur le côté d'aspiration (201, 301) à partir du bord arrière (205, 305) et
- une zone convexe (207, 307) s'étendant sur le côté de pression (202, 302) à partir du bord arrière (205, 305),
dans laquelle la zone convexe (207, 307) sur le côté de pression (202, 302) définit une zone de transition arrondie du côté de pression (202, 302) vers le bord arrière (205, 305),
**caractérisée en ce que**
la ligne moyenne (230, 240, 250, 330), dans la zone dans laquelle la ligne moyenne (230, 240, 250, 330) est définie par la zone convexe (207, 307) s'étendant sur le côté de pression (202, 302) à partir du bord arrière (205, 305) et la zone convexe (206, 306) s'étendant sur le côté d'aspiration (201, 301) à partir du bord arrière (205, 305), présente un minimum local arrière (231, 241), qui se situe sous la corde de profil (203, 303), par conséquent dans une couche dans une zone entre la corde de profil (203, 303) et le côté de pression (202, 302), et que la ligne moyenne (230, 240, 250), dans une zone dans laquelle la ligne moyenne (230, 240, 250) est définie par une zone convexe (207) s'étendant sur le côté de pression (202) à partir du bord d'attaque (204) et la zone convexe (206) s'étendant sur le côté d'aspiration (201, 301) à partir du bord d'attaque (204, 304), présente un minimum local avant (232, 242, 251), qui se situe sous la corde de profil (203, 303), par conséquent dans une couche dans une zone entre la corde de profil (203, 303) et le côté de pression (202, 302), et/ou, **en ce que**
toute la ligne moyenne (230, 240, 250, 330) passe sous la corde de profil (203, 303), par conséquent dans une couche dans une zone entre la corde de profil (203, 303) et le côté de pression (202, 302).

2. Pale de rotor (108) selon la revendication 1, dans laquelle un ensemble (360, 380) pour influer sur l'écoulement d'air aérodynamique est disposé sur la zone de transition arrondie,
dans laquelle de préférence l'ensemble (360, 380) est réalisé en tant que volet de Gurney ou volet d'intrados.

3. Pale de rotor (108) selon la revendication précédente 2, dans laquelle l'ensemble (360, 380) est disposé à un angle supérieur à 90° par rapport à une direction de soufflage théorique locale, en particulier supérieur à 100° par rapport à une direction de soufflage théorique locale, sur la zone de transition arrondie.

4. Pale de rotor (108) selon au moins l'une des revendications précédentes 2 ou 3, dans laquelle l'ensemble (360, 380) présente une longueur comprise entre 0,1 % et 40 % de la profondeur de profil,
dans laquelle de préférence l'épaisseur de profil relative du profil (200, 300)
- est au maximum de 30 % et la longueur de l'ensemble (360, 380) atteint au maximum 10 % de la profondeur de profil ou
- est supérieure à 30 % et la longueur de l'ensemble (360, 380) atteint au maximum 40 % de la profondeur de profil.

5. Pale de rotor (108) selon la revendication précédente 4, dans laquelle l'ensemble (360, 380) est mobile à partir d'une première position, dans laquelle l'écart entre le bord de contour extérieur (361) de l'ensemble (360, 380) et le bord de fuite côté aspiration atteint au moins 10 % de l'épaisseur de profil maximale apparaissant entre le côté d'aspiration (201, 301) et le côté de pression (202, 302), en direction d'une deuxième position, qui décrit une configuration à portance réduite dans laquelle l'écart entre le bord de contour extérieur (361) de l'ensemble (360, 380) et le bord de fuite côté aspiration (315) est réduit.

6. Pale de rotor (108) selon au moins l'une des revendications précédentes 2 à 5, dans laquelle l'ensemble (360, 380) est réalisé de manière à pouvoir être commandé activement pour le contrôle de portance.

7. Pale de rotor (108) selon au moins l'une des revendications précédentes, dans laquelle la ligne moyenne (230, 240, 250, 330), dans une zone dans laquelle la ligne moyenne (230, 240, 250, 330) est définie par la zone convexe (207, 307) s'étendant sur le côté de pression (202, 302) à partir du bord arrière (205, 305) et la zone convexe (206, 306) s'étendant sur le côté d'aspiration (201, 301) à partir du bord arrière (205, 305), passe sous la corde de profil (203, 303) et/ou présente une courbure mathématiquement positive.

8. Pale de rotor (108) selon au moins l'une des revendications précédentes, comprenant le minimum local avant (232, 242) et le minimum local arrière (231, 241),
dans laquelle le côté de pression (202, 302), dans une zone qui entre la zone convexe (217), qui s'étend à partir du bord d'attaque (204, 304), et la zone convexe (207), qui s'étend à partir du bord arrière (205, 305), présente une zone concave (227),
dans laquelle de préférence le minimum local arrière (231, 241) ou le minimum local avant (232, 242) est un minimum absolu.

9. Pale de rotor (108) selon au moins l'une des revendications précédentes, dans laquelle le bord arrière (205, 305)
- est un bord arrière (205, 305) fermé ou
- est un bord arrière (205, 305) plat, dans laquelle une hauteur du bord arrière (205, 305) plat
∘ est inférieure à 40 %, de préférence inférieure à 20 %, de préférence inférieure à 10 %, de l'épaisseur de profil maximale apparaissant entre le côté d'aspiration (201, 301) et le côté de pression (202, 302), et/ou
∘ éventuellement atteint à peu près 50 % de l'écart entre le bord de contour extérieur de l'ensemble (360, 380) et le bord de fuite côté aspiration.

10. Pale de rotor (108) selon au moins l'une des revendications précédentes, dans laquelle le profil (200, 300) présente une réserve d'épaisseur, qui définit un rapport d'un écart d'une épaisseur de profil maximale par rapport au bord d'attaque (204, 304) en direction de la corde de profil (203, 303) et de la longueur de la corde de profil (203, 303), dans laquelle le rapport est de préférence inférieur à 40 %.

11. Eolienne (100) avec au moins une pale de rotor (108) selon au moins l'une des revendications précédentes 1 à 10.

12. Procédé pour la conception d'une pale de rotor (108), qui s'étend en direction longitudinale (112) avec un tracé de profil à partir d'un raccordement de pale (114) vers un bout de pale (116), avec les étapes :
- de sélection d'au moins un profil (200, 300) pour le tracé de profil, comprenant
∘ un côté d'aspiration (201, 301) et un côté de pression (202, 302),
∘ une épaisseur de profil relative supérieure à 25 %,
∘ une corde de profil (203, 303), qui s'étend entre un bord d'attaque (204, 304) et un bord arrière (205, 305) du profil (200, 300) et présente une longueur définissant une profondeur de profil,
∘ une ligne moyenne (230, 240, 250, 330), qui passe au moins en partie sous la corde de profil (203, 303), par conséquent dans une couche dans une zone entre la corde de profil (203, 303) et le côté de pression (202, 302),
∘ une zone convexe s'étendant sur le côté d'aspiration (201, 301) à partir du bord arrière (205, 305) et
∘ une zone convexe s'étendant sur le côté de pression (202, 302) à partir du bord arrière (205, 305),
dans lequel la zone convexe sur le côté de pression (202, 302) définit une zone de transition arrondie du côté de pression (202, 302) vers le bord arrière (205, 305),
- de préférence d'adaptation d'un tracé de hauteur d'un profil (200, 300) par disposition d'un ensemble (360, 380) pour influencer l'écoulement aérodynamique sur la zone de transition arrondie,
dans lequel la sélection de l'au moins un profil (200, 300) et/ou l'adaptation du tracé de hauteur repose au moins en partie sur un calcul d'un rendement énergétique annuel à obtenir et/ou une détermination de cas de charge spécifiques au site attendus, **caractérisé en ce que**
la ligne moyenne (230, 240, 250, 330), dans la zone dans laquelle la ligne moyenne (230, 240, 250, 330) est définie par la zone convexe (207, 307) s'étendant sur le côté de pression (202, 302) à partir du bord arrière (205, 305) et la zone convexe (206, 306) s'étendant sur le côté d'aspiration (201, 301) à partir du bord arrière (205, 305), présente un minimum local arrière (231, 241), qui se situe sous la corde de profil (203, 303), par conséquent dans une couche dans une zone entre la corde de profil (203, 303) et le côté de pression (202, 302), et que
la ligne moyenne (230, 240, 250), dans une zone dans laquelle la ligne moyenne (230, 240, 250) est définie par une zone convexe (207) s'étendant sur le côté de pression (202) à partir du bord d'attaque (204) et la zone convexe (206) s'étendant sur le côté d'aspiration (201, 301) à partir du bord d'attaque (204, 304), présente un minimum local avant (232, 242, 251), qui se situe sous la corde de profil (203, 303), par conséquent dans une couche dans une zone entre la corde de profil (203, 303) et le côté de pression (202, 302), et/ou que
toute la ligne moyenne (230, 240, 250, 330) passe sous la corde de profil (203, 303), par conséquent dans une couche dans une zone entre la corde de profil (203, 303) et le côté de pression (202, 302).

13. Procédé selon la revendication précédente 12, dans lequel le tracé de hauteur du profil (200, 300) est adapté de telle sorte qu'un écart entre un bord de contour extérieur de l'ensemble (360, 380) et un bord de fuite côté aspiration atteint au moins 10 % d'une épaisseur de profil maximale apparaissant entre le côté d'aspiration (201, 301) et le côté de pression (202, 302),
de préférence comprenant en outre l'étape :
- d'adaptation d'un coefficient de portance local, en particulier à un état de fonctionnement d'une éolienne (100), par une orientation de l'ensemble (360, 380) par
∘ déplacement de l'ensemble (360, 380) à partir d'une première position, dans laquelle l'écart entre un bord de contour extérieur de l'ensemble (360, 380) et un bord de fuite côté aspiration atteint au moins 10 % de l'épaisseur de profil maximale apparaissant entre le côté d'aspiration (201, 301) et le côté de pression (202, 302), en direction d'une deuxième position, qui décrit une configuration à portance réduite dans laquelle l'écart entre le bord de contour extérieur de l'ensemble (360, 380) et le bord de fuite côté aspiration est réduit et/ou
∘ déplacement de l'ensemble (360, 380) à partir d'une deuxième position, qui décrit une configuration à portance réduite dans laquelle l'écart entre le bord de contour extérieur de l'ensemble (360, 380) et le bord de fuite côté aspiration est inférieur à 10 % de l'épaisseur de profil maximale apparaissant entre le côté d'aspiration (201, 301) et le côté de pression (202, 302), en direction d'une première position dans laquelle l'écart entre un bord de contour extérieur de l'ensemble (360, 380) et un bord de fuite côté aspiration atteint au moins 10 % de l'épaisseur de profil maximale apparaissant entre le côté d'aspiration (201, 301) et le côté de pression (202, 302).
